# EUROPEAN PATENT APPLICATION

(11) **EP 4 333 472 A1**
(43) Date of publication of application: **06.03.2024**
(21) Application number: 22192565.4
(22) Date of filing: 29.08.2022
(51) Int. Cl.: H04W 4/80, H04W 4/20

(54) **METHODS AND DEVICES TO MAINTAIN SHORT-RANGE WIRELESS CONNECTIONS WITH MULTIPLE DEVICES TO STREAM AUDIO**

(71) Applicant: Intel Corporation, Santa Clara, CA 95054 (US)
(72) Inventor: BHASIN, Sheetal, 560048 Bangalore (IN); SREENIVASAREDDY, Madhukiran, 560103 Bangalore (IN); AAGIRU, Vamshi Krishna, 560048 Bangalore (IN); R, Rahul, 683102 Aluva (IN); SINGH, Balvinder Pal, 490020 Bhilai (IN); PRABHA, Abhijith, 686667 Piravom (IN); K, Vishnu, 680301 Thrissur (IN)
(74) Representative: Viering, Jentschura & Partner mbB Patent- und Rechtsanwälte

(57) **Abstract**

A communication device may include a memory and a processor configured to provide audio output to an audio output interface based on audio data received via an active link of a plurality of short-range wireless communication links established between the communication device and further communication devices, encode request information for a transmission to a first communication device of the further communication devices, the first communication device configured to stream audio via the active link, wherein the request information is representative of an audio streaming request received from a second communication device of the further communication devices via an established link of the plurality of established short-range wireless communication links, and set the established link as the active link based on response information received from the first communication device, wherein the response information is representative of a received user interaction based on the encoded request information.

## Description

### Technical Field

This disclosure generally relates to methods and devices to maintain short-range wireless connections with multiple devices to stream audio.

### Background

Many wireless communication technologies, in particular, short-range wireless communication technologies (e.g. Bluetooth, Wi-Fi Direct) may allow direct communication between two communication devices using established short-range wireless communication links. Considering the capability of short-range wireless communication devices to maintain established short-range wireless communication links simultaneously, it may be desirable for a short-range wireless communication device to stream audio from different short-range wireless communication devices at different time instances, which each different short-range wireless communication device has an established short-range wireless communication link with the short-range wireless communication device.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an exemplary radio communication network;
FIG. 2 shows an exemplary internal configuration of a communication device;
FIG. 3 shows an exemplary illustration of a network environment including various types of communication devices;
FIG. 4 shows an exemplary illustration including three communication devices forming a short-range wireless communication network;
FIG. 5 shows an example of a communication device, such as a user communication device;
FIG. 6 shows an example of a communication device, such as an audio communication device;
FIG. 7 shows an exemplary illustration of a protocol stack according to BT communication protocol in a generalized manner that may apply to both BR/EDR BT and BT LE technologies;
FIG. 8 shows exemplary procedures associated with audio streaming;
FIG. 9 shows exemplary procedures associated with the exchange of status information representing states of connected devices;
FIG. 10 shows exemplary procedures associated with the exchange of information;
FIG. 11 shows an example of a method;
FIG. 12 shows an example of a method.

### Description

The following detailed description refers to the accompanying drawings that show, by way of illustration, exemplary details and aspects in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

As used herein, "communication device" may refer to any type of electronic devices that are able to exchange information with at least another device, for example according to various types of radio communication technologies and using various types of communication protocols as exemplarily provided herein. Exemplarily, a communication device may be, or may include, an access point, a station, any types of user devices which may include a suitable device including a processor, that may include, a mobile device or a non-mobile device, a user equipment (UE), a computing device, such as a personal computer (PC), a desktop computer, a mobile computer, a laptop computer, a notebook computer, a tablet computer, a server, a handheld computing device, a wearable device, such as a smart bracelet, a smart watch, smart glasses, a smart ring, etc., an internet of things (IoT) device, a sensor, a mobile phone, a cellular telephone, any types of wireless accessories, such as a headphone, a headset, a microphone, a speaker, a domotics (smart home) device, a docking station, a medical device, an endoscope, a surgical robot, a hearing aid, a cochlear implant device or a system, a Bluetooth medical device, an audio communication device, a headset, a headphone, an earphone, an earbud, a true wireless earphone, a wireless speaker, etc.

As used herein, the term "duty cycle" may refer to a fraction of one period of time in which a signal or a system is active. For example, a duty cycle may include a cycle defined by an inactive period and an active period. The corresponding entity may transmit and/or receive communication signals in the active period. The corresponding entity do not transmit and/or receive communication signals in the inactive period. The corresponding entity may have circuitries to transmit and/or receive communication signals and at least one of the circuitries may operate in low power mode during the inactive period.

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth^{®}, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("12V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz-71 GHz band, any band between 65.88 GHz and 71 GHz, bands currently allocated to automotive radar applications such as 76-81 GHz, and future bands including 94-300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies including Wireless Personal Area Network (WPAN) standards (e.g., according to any IEEE 802.15 standard), Wi-Fi Direct, Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Bluetooth (BT) technology may use frequencies between 2.402 and 2.480 GHz, or 2.400 and 2.4835 GHz including guard bands 2 MHz wide at the bottom end and 3.5 MHz wide at the top, according to frequency-hopping spread spectrum. A communication device operating according to a Bluetooth protocol may divide data to be transmitted into packets, and transmit each packet into a channel designated for the use (e.g. of bandwidth of 1 MHz for classic Bluetooth and 2 MHz for Bluetooth Low Energy (BLE)). A communication device configured to operate according to a Bluetooth protocol may operate in a basic rate (BR) mode using a Gaussian frequency-shift keying (GFSK) modulation, and/or operate in an enhanced data rate (EDR) mode, that is considered to provide a faster data rate and lower power consumption, using a differential phase-shift keying (DPSK) (e.g. 8-DPSK) and/or differential quadrature phase-shift keying (DQPSK) (e.g. π/4-DQPSK) based on the quality of the communication channel. A communication device configured to operate according to a Bluetooth protocol may operate according to the Bluetooth Low Energy (BLE) technology that is integrated within the Bluetooth standard starting from v4.0, which operates within the same frequency spectrum, using GFSK modulation.

Wi-Fi Direct technology, which may also be referred to as Wi-Fi P2P, may be one of the exemplary technologies used with respect to peer-to-peer connections provided in this disclosure. Peer-to-peer connections may refer to point-to-point connections between two communication devices according to a peer-to-peer communication protocol. Within a peer-to-peer network, communication devices (two or more) may communicate with each other over the P2P connections established between them. A Wi-Fi Direct connection may allow communication devices to communicate over an established Wi-Fi Direct connection without an intermediary entity such as an access point or a router. Wi-Fi Direct technology allows for forming a P2P network by forming a P2P group in which a communication device may take a role as a Group Owner (GO) or a Group Client (GC).

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception are handled by radio-layer components such as RF transceivers and antennas, and the logical transmission and reception over the software-level connection is performed by the processors or controllers. The term "communicate" encompasses one or both of transmitting and receiving, i.e. unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations. The term "channel state information" is used herein to refer generally to the wireless channel for a wireless transmission between one or more transmitting antennas and one or more receiving antennas and may take into account any factors that affect a wireless transmission such as, but not limited to, path loss, interference, and/or blockage.

In accordance with various aspects of this disclosure, a short-range wireless communication device, such as a multipoint BT device, may communicate with multiple short-range wireless communication devices over multiple wireless communication links, in which each communication link is established between the short-range wireless communication device and one of the multiple short-range wireless communication devices. The short-range wireless communication device may have connections that are established with multiple short-range wireless communication devices simultaneously.

The short-range wireless communication device may be a wireless audio device, such as a wireless headphone, wireless earphone, wireless earbud, wireless headset, wireless speaker, wireless microphone, etc., that may decode audio data received from another short-range wireless communication device and provide decoded audio output to an audio interface that is coupled to an audio output device (e.g. audio drivers, speakers), and/or that may receive audio input from an audio interface that is coupled to an audio input device (e.g. microphone), and encode audio data to be transmitted to another short-range wireless communication device. Accordingly, while the wireless audio device exchanges audio data over a first established communication link with a first short-range wireless communication device, the wireless audio device may also communicate with at least one second short-range wireless communication device over a second established communication link.

The above-mentioned framework may be used to interrupt the audio data flow to/from the audio output/audio input device. For example, a multipoint BT headphone may have established simultaneous connections with two source devices, over one of which the multipoint BT headphone may receive audio data to provide audio output. BT technology may allow maintaining both connections simultaneously, while the multipoint BT headphone may provide an audio output based on audio data received from one of the source devices. The other source device may send an interrupt request in response to a change in the status of the other source device, such as an incoming call, which the interrupt request may cause the multipoint BT headphone to switch operations in order to provide an audio output based on received audio data from the other source device. However, this operation may not always be necessary or desired. It may be desirable to rely on user interaction to determine whether to perform the switching to the other source device or not in response to a received interrupt request.

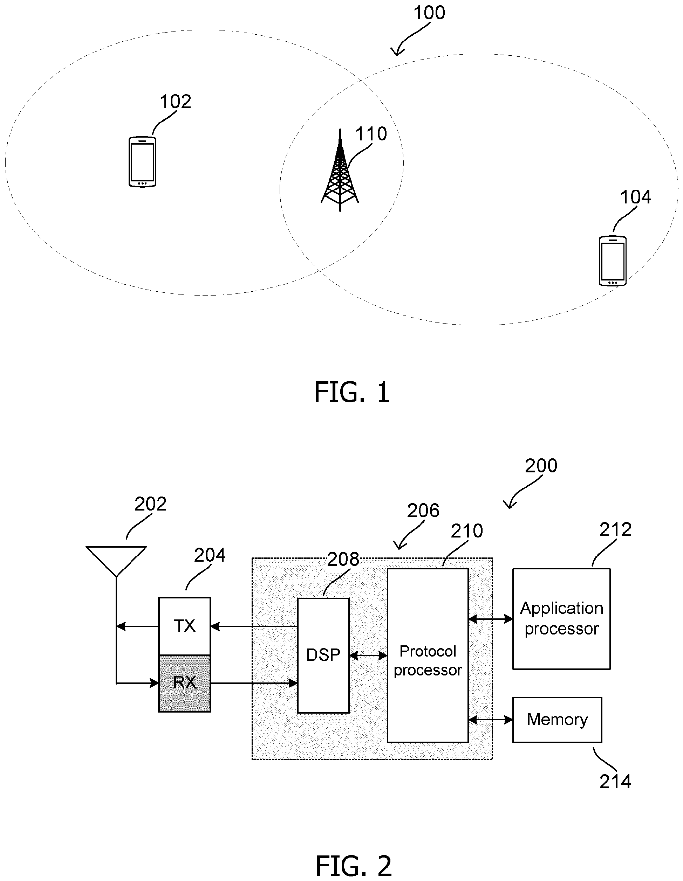

FIGs. 1 and 2 depict a general network and device architecture for wireless communications. In particular, FIG. 1 shows exemplary radio communication network 100 according to some aspects, which may include communication devices depicted as terminal devices 102 and 104 and communication devices depicted as network access node 110. Radio communication network 100 may communicate with terminal devices 102 and 104 via network access node 110 over a radio access network. Although certain examples described herein may refer to a particular radio access network context (e.g., LTE, UMTS, GSM, other 3rd Generation Partnership Project (3GPP) networks, WLAN/WiFi, Bluetooth, 5G NR, mmWave, etc.), these examples are demonstrative and may therefore be readily applied to any other type or configuration of radio access network. In various examples, terminal devices 102 and 104 may communicate with each other without involvement of the radio access network, such as over a peer-to-peer network.

Particularly, within the context of BT technology, the network 100 may be a piconet, the network access node 110 may be a primary device (i.e. "master device", "central device"), and the terminal devices 102 and 104 may be secondary devices (i.e. "slave device", "peripheral device"). The secondary devices may communicate with each other only through the primary device. Each secondary device may have a communication link established between the respective secondary device and the primary device, but it may not have any communication link established with another secondary device. A primary device or a secondary device may also have established communication links with another piconet to perform communication operations within another piconet.

In an exemplary cellular context, network access node 110 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access node 110 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range wireless context other than BT, network access node 110 and 120 may be access points (APs, e.g., WLAN or WiFi APs), while terminal device 102 and 104 may be short range terminal devices (e.g., stations (STAs)). Network access node 110 may interface (e.g., via an internal or external router) with one or more external data networks. Network access node 110 and terminal devices 102 and 104 may include one or multiple transmission/reception points (TRPs).

Network access node 110 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access node 110 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access node 110 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access node 110 may follow the defined communication protocols to transmit and receive data over the radio access network domain of radio communication network 100, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network 100.

FIG. 2 shows an exemplary internal configuration of a communication device. The communication device may include a terminal device 102 according to some aspects, and it will be referred to as terminal device 102, but the communication device may also include various aspects of network access nodes 110, 120 as well. The terminal device 102 may include antenna system 202, radio frequency (RF) transceiver 204, baseband modem 206 (including digital signal processor 208 and protocol controller 210), application processor 212, and memory 214. Although not explicitly shown in FIG. 2, in some aspects terminal device 102 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Terminal device 102 may transmit and receive radio signals on one or more radio access networks. Baseband modem 206 may direct such communication functionality of terminal device 102 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of terminal device 102 shown in FIG. 2 depicts only a single instance of such components.

Terminal device 102 may transmit and receive wireless signals with antenna system 202. Antenna system 202 may be a single antenna or may include one or more antenna arrays that each include multiple antenna elements. For example, antenna system 202 may include an antenna array at the top of terminal device 102 and a second antenna array at the bottom of terminal device 102. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Terminal device 102 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of terminal device 102 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of terminal device 102 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio terminal device 102 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Terminal device 102 may also include application processor 212 and memory 214. Application processor 212 may be a CPU, and may be configured to handle the layers above the protocol stack, including the transport and application layers. Application processor 212 may be configured to execute various applications and/or programs of terminal device 102 at an application layer of terminal device 102, such as an operating system (OS), a user interface (UI) for supporting user interaction with terminal device 102, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of terminal device 102, such as a hard drive or another such permanent memory device. Although not explicitly depicted in FIG. 2, the various other components of terminal device 102 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112.

Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

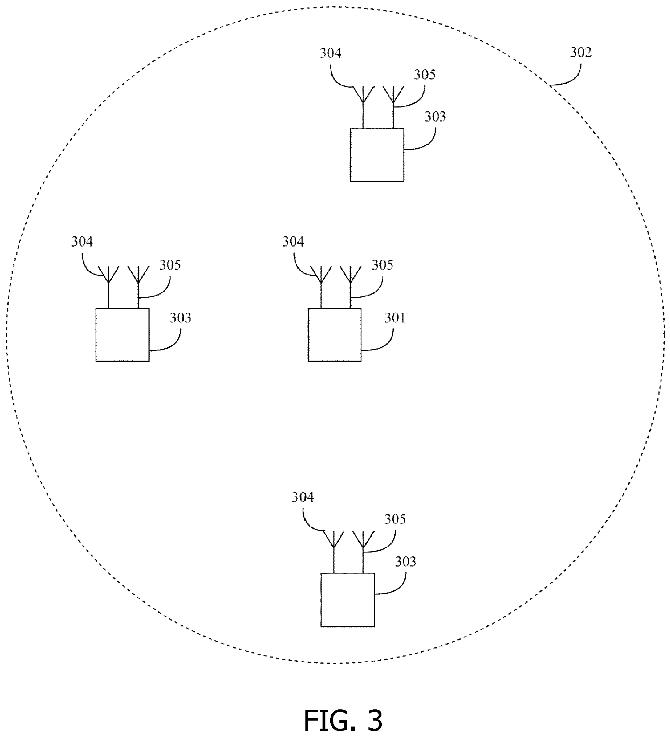

FIG. 3 shows an exemplary illustration of a network environment including various types of communication devices in accordance with various aspects of this disclosure. The network environment is depicted as an example of a BT network including BT devices configured to communicate with BT signals using BT links established in-between. The network 300 may include a BT device 301 that is couplable to various types of communication devices 303 within a coverage area 302 using BT technology. In various examples, the BT device 301 may communicate with further BT devices 303 using BT communication. For this purpose, the BT device 301 may communicate using radio communication signals within a certain range 302. In this illustrative example, the BT device 301 may be configured to operate as a primary BT device, and further BT devices 303 may be configured to operate as a secondary BT device.

In accordance with various aspects provided herein, the BT technology may include BR/EDR (Basic Rate/Enhanced Data Rate) BT, or BT LE (Low Energy). Accordingly, BT devices 301, 303 depicted herein may include at least one BT controller that is configured to perform operations according to BR/EDR BT and/or BT LE.

In accordance with the BR/EDR BT technology, BT devices 301, 303 within the network 300 may share a physical communication channel that is shared between all BT devices 301, 303 of the network 300. The primary BT device (i.e. the BT device 301) may synchronize the secondary BT devices (i.e. further BT devices 303) with a synchronization reference (a common clock and frequency hopping pattern). The secondary BT devices may perform communication operations according to the synchronization reference (e.g. according to common clock and frequency hopping pattern provided by the primary BT device). The physical communication channel is divided into time slots, and BT devices 301, 303 may transmit and/or receive BT signals using time-division duplex (TDD) operation.

In accordance with the BT LE technology, the primary BT device (i.e. the BT device 301, "initiator") may monitor and receive advertising packets from the secondary BT devices (i.e. the BT devices 303) within the network 300, and, in response to advertisement operations, initiate connection events (exchange of data) over the established physical channel. The primary BT device may provide the frequency hopping pattern to be used for the established connection.

In these technologies, a physical link may be formed between the primary BT device and a secondary BT device for each secondary BT device to facilitate the exchange of data between the primary BT device and the respective secondary BT device. Each physical link may be used by the primary BT device or the respective secondary BT device as a transport for one or more logical links in-between the BT devices respectively. At a receive operation from a BT device, data traffic on a physical link may be demultiplexed to the one or more logical links, and at a transmit operation to a BT device, data traffic on one or more logical links may be multiplexed to the physical link.

A BT device may provide functions to control and manage aspects associated with baseband operations and physical layer operations at a link layer, that is associated with the one or more logical links. The BR/EDR BT device may perform link manager protocol (LMP) functions (i.e. the link manager function) within the protocol stack, that may use an asynchronous connection-oriented logical transport (i.e. ACL) via LMP protocol signaling. Furthermore, the BR/EDR BT device may perform functions to process synchronous data streams. Similarly, the BT LE device may perform link layer protocol (LLP) functions (i.e. the link layer functions) within the protocol stack, that may use an LE asynchronous connection logical transport (i.e. LE ACL). Both BR/EDR BT and BT LE may further include logical layer control and adaptation protocol (L2CAP) functions including channel-based abstraction for application layer, segmentation, and reassembly of application data, and multiplexing and de-multiplexing of multiple channels over a shared logical link, etc.

A BT device may further include additional protocols that are interoperable with the BR/EDR and/or LE technologies based on the capabilities of the respective BT device and its intended use. Additional protocols may include various predefined BT profiles (i.e. services, functions) supported by the BT technology, some of which may reside in a layer that is above the layers of the protocol stack mentioned above. For each profile, BT devices performing communication based on a profile may be configured to perform various functions of the respective profile to exchange data associated with the respective profile.

For example, in accordance with various aspects provided herein, a BT device may be configured to perform advanced audio distribution profile (A2DP) functions based on defined A2DP operations (e.g.. Advanced Audio Distribution Profile - Bluetooth^{®} Profile Specification, v1.4, 2022-06-21). The A2DP may include various functions associated with streaming (i.e. transferring) audio data from one BT device to another BT device over a BT connection. In accordance with various aspects provided herein, a BT device may perform A2DP functions to receive and/or decode and/or send and/or encode audio data. The A2DP functions may include controlling the processing of audio data based on predefined audio decoding and encoding operations, such as low-complexity subband codec (SBC), MPEG-1, MPEG-2, and MPEG-4, etc.

A2DP functions may be based on functions of further defined protocols (e.g. Audio/Video Distribution Transport Protocol (AVDTP; Audio/Video Distribution Transport Protocol Specification, Bluetooth^{®} Specification, v.13, 2012-07-24), and/or Generic Audio/Video Distribution Profile (GAVDP; Generic Audio/Video Distribution Profile Specification, Bluetooth^{®} Specification, v.13, 2012-07-24)) for distribution of the audio data. In various examples, a BT device may perform AVDTP functions or GAVDP functions to receive and/or decode and/or send and/or encode audio data. A BT device configured to perform functions by which the BT device assumes a designated role to perform functions to decode/encode audio data. A BT device may be configured to operate as a source device, that encodes digital audio data stream to provide the encoded audio data to a sink device of a network. A BT device may be configured to operate as a sink device, that receives encoded digital audio data stream from a source device of a network.

For example, in accordance with various aspects provided herein, a BT device may be configured to perform audio/video remote control profile (AVRCP) functions based on defined AVRCP operations (e.g.. Audio/Video Remote Control - Bluetooth^{®} Profile Specification, v1.6.2, 2019-01-21). The AVCRP may include various functions associated with controlling audio/video functions of a BT device by another BT device over a BT connection. In accordance with various aspects provided herein, a BT device may perform AVCRP functions to receive and/or decode and/or send and/or encode messages including information about audio/video operations and control of the audio/video operations. In various examples, such operations may include providing messages that may cause the BT device to display information and receive user interactions.

AVRCP functions may be based on functions of further defined protocols (e.g. Audio/Video Control Transport Protocol (AVCTP; Audio/Video Control Transport Protocol Specification - Bluetooth^{®} Profile Specification, V14, 2012-07-24)) for controlling audio and/or video operations of a BT device. In various examples, a BT device may be configured to perform AVCTP functions to control audio and/or video operations of another BT device via a BT connection.

For example, in accordance with various aspects provided herein, a BT device may be configured to perform headset profile (HSP) functions based on defined HSP operations (i.e. Headset Profile - Bluetooth^{®} Profile Specification, v12r00, 2008-12-18) or hands-free profile (HFP) functions based on defined HFP operations (i.e. Hands-Free Profile - Bluetooth^{®} Profile Specification; v1.8, 2020-0414). The HSP or HFP may include various functions associated with controlling audio/video functions particularly related to a headset or hands-free operations of a BT device by another BT device over a BT connection. In accordance with various aspects provided herein, a BT device may perform HSP or HFP functions to receive and/or decode and/or send and/or encode messages including information about headset or hands-free operations. In various examples, such operations may include providing messages including information about calls and voice related data transfer.

HSP or HFP functions may be based on functions of further defined protocols. Furthermore, functions according to A2DP, AVCTP, GAVDP, AVCRP may include operations based on asynchronous connection-oriented logical transport (ACL) communication links. A BT device that may perform HSP and/or HFP functions may be configured to operate using synchronous connection-oriented (SCO) and/or enhanced synchronous connection-oriented (e-SCO) communication links.

A BT device may be configured to communicate using ACL links or SCO links (including e-SCO links unless indicated otherwise). An ACL link may be a packet oriented link, generally used for data traffic between BT devices in which data integrity is desired. An SCO link may include radio links that are generally used for time-critical data communication, such as voice data. To avoid any misunderstanding, a BT device may be configured to operate according to any one or any combination of the profiles mentioned herein using communication links as supported for the profiles respectively. For example, it is common for a BT headset to be configured to operate by performing A2DP, AVCRP, HSP, and HFP functions. Dependencies and positions in the protocol stack associated with each above-mentioned profiles may vary due to flexibility of Bluetooth specification to support various use cases.

In various aspects provided herein, in particular within the context of communication between BT BLE Device, the respective BT BLE Devices may stream audio data via one or more isochronous connections using an isochronous physical channel. BT BLE Devices may transfer isochronous audio data in-between using a logical transport. Such streams may be referred to as a Connected Isochronous Stream (CIS). In accordance with various aspects, the CIS may be used to stream audio. In various examples, the communication link may be the logical link transporting the CIS between BT BLE devices.

In various examples, the BT device 301 may communicate with multiple further BT devices 303 within the BT network over established communication links between BT devices that are maintained simultaneously in the network 300. For example, the BT device 301 may be communicatively coupled to each of further BT devices 303 over established connections. In various examples, the BT device 301 may be configured to operate as a sink device, as an entity that receives audio data stream from another entity, and to output audio. Further BT devices 303 may operate as a source device, as an entity that provides audio data stream to another entity. In various examples, the BT device 301 may be configured to operate as a source device, as an entity that provides audio data stream to another entity, and further BT devices 303 may operate as a sink device, as an entity that receives the audio data stream from another entity.

It is to be noted that the definitions in this disclosure associated with sink devices and source devices and usage of this terminology are not to be taken particularly limited to A2DP profile operations. A source device is to be interpreted as a source entity of audio data, and a sink device is to be interpreted as an entity that receives the audio data and that provides an audio output based on the audio data. Furthermore, in a client-server based model, the roles that are assigned for each connection between the BT 301 and a respective further BT device 303 may vary. The BT device 301 may take a role of a client or a server for a service associated with the established communication link(s). Similarly, each of further BT devices 303 may take a role of a client or a server for a service associated with the established communication link(s).

Establishing a BT connection between BT devices may be realized once the BT devices are aware of each other. The primary device may receive an indication of a communication device with the response, which the primary device may use to establish a connection using an identifier of a secondary device. BT devices may store identifiers of other BT devices in their respective memories. BT technology supports pairing, in which two communication devices that are paired with each other may establish a connection with each other. For this purpose, BT devices may exchange a previously defined pass-phrase (e.g. passkey, password, personal identification number (PIN) that may be designated by the end of the inquiry) to establish a previously paired connection between devices to provide a secure connection.

Once the devices have the necessary information (e.g. identifiers, pass-phrase, clock, etc.) obtained through an inquiry phase to establish connections, the primary device may initiate a paging procedure, in which the primary device may transmit radio communication signals that are encoded based on the obtained information with respect to the secondary device. In response to a series of exchanged messages according to the paging procedure, which may include the identifier of the secondary device, a connection may be established between the primary device and the secondary device.

The state representing the presence of an established connection between devices may be referred to as a connection state. When devices are in a connection state, the respective BT devices may have an established connection in-between, via which can send or receive information (e.g. BT packets). The exchanged information may include control information (e.g. control messages) or user data (e.g. audio data). A connection state associated with a BT device may include various modes. For example, a connection state of a BT device may include an active mode, the BT device, based on the role associated with the communication, may actively communicate with another BT Device. The active mode may also support operations in a low-power mode (e.g. sleep mode, a mode not listening to the communication channel for a defined period of time, a mode switching a communication interface to a low-power mode, a mode deactivating one or more components of a communication device).

In accordance with various aspects, for a BT device, the period of times in which a BT device may operate in a low-power mode and in a mode that performs communication operations including transmitting or sending data, or listening to a communication channel may be defined with duty-cycles, defining when a BT device may go into a low-power mode, and when a BT device may perform communication operations.

A connection state of a BT device may include a sniff mode. In accordance with various aspects provided herein, a low-power mode may include a sniff mode. In a sniff mode, a BT device may operate with a duty cycle that is lower than the duty cycle of the active mode. For example, a secondary device operating in an active mode may listen to the communication channel in every ACL slot, while the secondary device operating in a sniff mode may reduce the period of listening to the communication channel, and listen only in predefined time slots. A respective primary device may also configure communications to the secondary device accordingly to communicate with the secondary device only in the predefined time slots.

In accordance with various aspects provided herein, a low-power mode may include a subrating mode (e.g. sniff subrating or subrated connection). A BT device, in particular a BT BLE device, may operate with a subrating mode, in which the duty cycle associated with the BT communication is reduced based on a subrating parameters. For example, subrating parameters may include a subrating factor representing the reduction of the duty cycle. For example, a subrating factor N (e.g. N=4) represents that the BT device may be configured to communicate with (only) every Nth (e.g. 4^{th}) communication event of communication events designated for the respective BT device. The BT device may implement the subrating mode via a subrated connection (e.g. in active mode), or in a sniff mode.

In accordance with various aspects of this disclosure, communication devices may exchange data in various modes. As indicated before, BT communication may support a mode in which asynchronous connection-less (ACL) protocol is used. The ACL protocol may include exchanging data frames between communication devices over an established communication, in which the data frames are designated for the purpose of exchanging data. ACL protocol may support retransmissions. BT communication may further support a mode in which a synchronous connection-oriented (SCO) protocol is used. SCO protocol may, in particular, be suitable for exchanging real-time information such as audio or video data. In SCO, retransmissions are not used, but forward error correction may be supported.

BT devices 301, 303 within the network may include various circuits and components configured to receive and transmit communication signals. In various examples, BT devices 301, 303 within the network 300 may communicate according to BT technology performing operations according to BT protocol using one or more antennas 304, 305. The BT devices 301, 303 may further communicate according to further communication protocols as well. It is depicted in this example that each antenna 304, 305 as a single antenna but this may not be limiting. BT devices 301, 303 may include further antennas that are designated to be used for further radio communication technologies that a respective BT device may operate.

In particular, within the context of audio streaming, the BT device 301 (e.g. a wireless audio device, such as a headset, a headphone, a speaker, etc.) may operate as a sink device and each of further BT devices 303 (e.g. a computer, such as a desktop computer, a laptop computer, tablet computer, etc.; a mobile device, such as a smartphone, a wearable device (e.g. a smartwatch); etc.) may operate as a source device. Further aspects are explained for a scenario in which the BT device 301 operates as the sink device, and further BT devices 303 operate as the source devices, but similar considerations would also apply to a scenario, in which the BT device 301 may operate as a source device and each of further BT devices 303 may operate as a sink device. Over the communication using multiple established communication links that are maintained simultaneously, the BT device 301 may operate as the sink device as the primary device of the network 500 that may communicate with further BT devices 303 as secondary devices.

As the BT device 301 being configured to operate as the sink device over multiple established communication links with multiple source devices, the BT device 301 may provide audio output for audio data stream received from one of the source devices. The process including disconnecting from a previously connected further BT device 303 and establishing a new connection with a new further BT device 303, for the purpose of changing the source device which the BT device 301 operates as the sink device, may not be needed. However, it may be desirable to implement a selection mechanism, that may allow the BT device 301 to select one of the multiple source devices, and provide audio output based on audio stream received from the selected source device.

A multipoint BT audio sink device, may maintain more than one BT connections that are established with more than one further BT source devices. Such a sink BT device may receive audio data stream from a first source BT device over a communication link between the sink BT device and the source BT device, while exchanging information with further source devices over communication links between the sink device and the further source devices respectively, for example, by using the communication channel according to a TDD scheme.

In an example that a second source BT device being a mobile phone, the mobile phone may send information indicating an incoming voice call at the mobile phone to the sink BT device. The sink BT device may, in response to received information indicating the incoming voice call, generate an indication representing the incoming voice call at the mobile phone for the user. The sink BT device may, in response to received information indicating the incoming voice call, interrupt the provided audio output based on audio data stream received from the first source BT device. The user may interact with an input device of the sink BT device (e.g. via a button) to accept the voice call. The sink BT device may begin to provide audio based on audio data stream received from the second source BT device. In various examples, the sink BT device may automatically begin to provide audio based on audio data stream received from the second source BT device in response to the received information, without a further need for interaction.

The above-mentioned procedure may not be desirable for various occasions. The audio data stream of the first source BT device may be more important for the user. For example, considering the currently trending employment of teleconferences or videoconferences, the user of the sink BT device may not desire an interruption of the audio input/output provided by the first source BT device every time there is an event at further source BT devices that may cause an interruption, yet, the user may also desire to have the capability to switch to the second source BT device based on the occasion. Commonly, such BT sink devices, such as headsets, headphones, and speakers, may not include an enhanced user interface to output detailed information for the context of multiple BT source devices, and it may be desirable to implement a mechanism, that would allow the user to interact by recognizing the context of multiple BT sources.

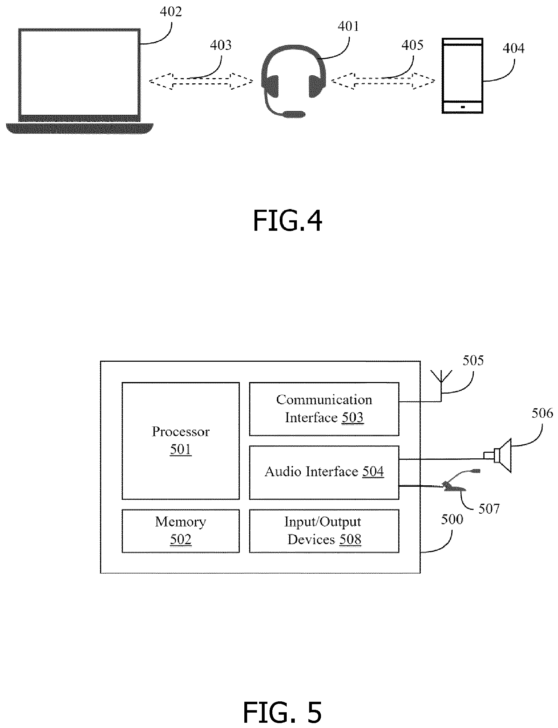

FIG. 4 shows an exemplary illustration including three communication devices forming a short-range wireless communication network. The network includes an audio communication device that is depicted as a headset 401 configured to communicate with a first user communication device that is depicted as a computer 402 via a first established short-range wireless communication link 403 and a second user communication device that is depicted as a mobile phone 404 via a second established short-range wireless communication link 405, by the employment of multipoint connections. In this constellation, the headset 401 may have defined the first established short-range wireless communication link 403 as the active link of the headset 401, and the headset 401 may stream audio bi-directionally with the computer 402, in which the headset 401 may send audio data based on audio input received by the microphone of the headset 401 to the computer 402 and receive audio data from the computer 402 and provide an audio output based on the received audio data to sound drivers of the headset 401. Accordingly, a user of the computer 402 may exemplarily listen to music, record audio, or perform a voice call, or in any event transfer audio data from and to the computer 402 using the headset 401.

In accordance with various aspects provided in this disclosure, the headset 401 may be configured to forward various types of notifications between the computer 402 and the mobile phone 404. These notifications may include information representing states of communication devices (e.g. status information). For example, a user may be using the computer 402 and by exchange of the notifications, the user may still be made aware of states or state changes associated with the mobile phone 404 without a need to interact with the mobile phone 404 to see the states through forwarding of notifications by the headset 401. In this constellation, the mobile phone 404 may omit to establish a further connection with the computer directly 402 which may result in conserving power by the mobile phone 404, since the mobile phone 404 may send information representing the states or state changes and establish an audio connection over the same communication link.

The mobile phone 404 may further attempt to initiate an audio connection, or, in particular, stream audio to and/or from the headset. For example, a user may interact with the mobile phone 404 to start streaming audio using the headset 401 (e.g. by interacting to play audio, by interacting to place a call). Alternatively, or additionally, the mobile phone 404 may receive a voice call and in response to received voice call the mobile phone 404 may attempt to initiate an audio connection or send audio streaming request to the headset 401.

In a scenario that the established communication links are BT links and the short-range wireless communication is a BT communication, the mobile phone 404 may send audio streaming request to the headset 401 using various BT profiles (e.g. A2DP, HFP, HSP, etc.) as explained herein. For example, in case of a received voice call, the mobile phone 404 may send a RING alert (i.e. a RING message), or an in-band ring tone to the headset 401, and a received RING alert or in-band ring tone may cause the headset 401 to recognize that there is an audio streaming request. For example, in the case of an exchange of audio media, a start streaming request associated with the A2DP profile, or an audio/video distribution transport protocol command may cause the headset 401 to recognize that there is an audio streaming request. A received audio streaming request may cause the headset 401 to simply cease the audio streaming between the headset 401 and the computer 403, or to issue a sound notification (e.g. a beep or a series of beeps, a preset audible notification) so that the user of the headset may press a button of the headset to accept the audio streaming request received from the mobile phone.

The above-mentioned mode of operation associated with the management of received audio streaming request may not be desirable, because the user may already be using the headset 401 for a purpose on which the user does not want any interruption (e.g. a voice call via the computer 402). Furthermore, because the headset 401 is not configured to provide information associated with the nature of the audio streaming request in a detailed manner, it may be desirable for the user to obtain more information associated with the audio streaming request. With an assumption that the attention of the user may be directed to the communication device which streams audio to the headset 401, it may desirable to provide information about the audio streaming request and its nature via the user interface of the communication device with which the headset stream audio.

Accordingly, the headset 401 may receive information about the audio streaming request from the mobile phone 404 and provide the information about the audio streaming request as request information, which is information that the computer 402 may recognize as it includes audio streaming request information received by the headset 401 from a further communication device. In response to receiving the request information from the headset 401, the computer 402 may display visual information about the audio streaming request received by the headset 401, such as information about the requester of the audio streaming request, information about the nature of the audio streaming request (e.g. whether it is about an incoming/outgoing call or an audio media playback/recording), and further information such as an identifier of an entity that the incoming call is received, or outgoing call is to be placed (e.g. a phone number, contact information in a phone book, etc.).

According to the displayed information, the user may decide whether to accept the audio streaming request or not, and interact with the computer 402 to express the decision. Based on the user interaction provided by the user, the computer 402 may send response information representing the decision of the user with respect to whether to accept the audio streaming request or not, and the headset 401 may, based on the received response information, either maintain the current audio streaming between the computer 402 and the headset 401, or may end the current audio streaming between the computer 402 and the headset 401 and may initiate streaming audio with the mobile phone 404.

FIG. 5 shows an example of a communication device, such as a user communication device. The communication device 500 includes a processor 501. The processor 501 may include a central processing unit, a graphics processing unit, a hardware acceleration unit, a neuromorphic chip, and/or a controller. The processor 501 may be implemented in one processing unit, e.g. a system on chip (SOC), or an integrated system or chip. The processor 501 may include more than one processing unit configured to provide various aspects as mentioned herein.

The communication device 500 may further include a memory 502 to store data. The memory 502 may store an operating system (not shown) including instructions configured to manage various operations of the processor 501, the memory 502, and the communication interface 503, and may further manage operations of audio interface 504, input and output (I/O) devices 508. The processor 501 and memory 502 (and also other various components of the communication device) and other entities may be communicatively coupled over an internal interface to communicate with each other (e.g. a bus, wires, etc.).

The communication interface 503 may cause the communication device 500 to communicate with further devices (e.g. other communication devices, external I/O devices) or to a radio access network, and accordingly the processor 501 may manage the communications with other devices for the communication device 500. The communication interface 503 various components, as exemplarily provided in accordance with FIG. 2, such as antenna system 202, radio frequency (RF) transceiver 204, baseband modem 206 (including digital signal processor 208 and protocol controller 210). The communication interface 503 may include a separate application processor, and memory, or in various examples, the processor 501 and the memory 502 may provide functions of an application processor and memory for communication purposes for one or more radio communication protocols.

In this illustrative example, the communication interface 503 may be at least configured to perform radio communication protocol according to a short-range radio communication, such as Bluetooth, WLAN, Wi-Fi Direct, WPAN, etc. In various examples, the communication device 500 may, via the communication interface 503, perform communication over peer-to-peer communication, and accordingly send or receive information (e.g. signals, messages, etc.). The communication interface 503 may further be configured to communicate for further radio communication protocols. For example, the communication interface 503 may be configured to communicate based on a cellular radio communication technology (e.g. LTE, 5G), or based on a wired communication protocol (e.g. LAN, ISDN, etc. The communication interface 503 may exchange information over established communication links according to the defined communication protocols

In accordance with various aspects of this disclosure, the communication device 500 may perform voice communication operations via the communication interface 503. For this purpose, the processor 501 may execute one or more instructions stored in the memory (e.g. O/S, one or more applications comprising one or more instructions) to cause the communication device 500 to perform voice communication operations. The voice communication operations may include receiving and/or making phone calls, receiving and/or sending messages, communicating with a further communication device to exchange audio, holding a voice call, or terminating a voice call. A call may refer to a session initiated between at least two communication devices to exchange audio data over an established communication channel.

The communication device 500 may further include one or more input and output (I/O) devices 508 that are communicatively coupled to the internal interface. It is depicted in the illustrative example that the communication device 500 includes I/O devices 508, however, this should not be taken as limiting, and the I/O devices 508 may be communicatively coupled to the communication device 500 via the communication interface 503.

The I/O devices 508 may include various components and devices to provide input to the communication device 500, in particular for the processor 501 to process received input to associate it for various instructions. The I/O devices 508 may include input devices that are designated based on the use case of the communication device 500. The provided input may include, in particular, an input associated with an interaction of a user using the respective input device. Exemplarily, a mouse may be one of the I/O devices 508 configured to deliver user interactions by moving a pointer via hand movements or pressing keys or a keyboard may be one of the I/O devices 508 delivering user interactions by receiving keystrokes, or a touchpad may be one of the I/O devices 508 delivering user interactions by receiving touch inputs, etc.

Furthermore, the I/O devices 508 may be, or may include, various types of sensors that are configured to detect and/or receive an interaction of a person. Such sensors may include image sensors (cameras), and/or accelerometers, and/or speedometers, and/or altimeters, and/or gyroscopes, and/or velocity sensors, and/or proximity sensors, and/or light sensors (e.g. ambient light sensor), and/or fingerprint sensors, and/or near field communication (NFC) sensors. These devices are provided only as examples. For example, an eye tracker (i.e. eye-tracking sensor) may be one of the I/O devices 508 providing eye-tracking information (e.g. eye-tracking sensor data) with respect to the gaze of a user, or motion information with respect to eye movements of a user, that may include eye movements relative to the head of the user. It may be desirable to employ an eye tracker especially, to monitor where the user is looking on a display, e.g. in which region of the displayed content.

The communication device 500 may further include the I/O devices 508 configured to provide an output based on instructions executed by the processor 501. The I/O devices 508 may include output devices that are designated depending on the use case of the communication device 500. The provided output may include, in particular, an output to present various types of information or indications for a user. For example, a display may be one of the I/O devices 508 configured to display visual information to the user in form of images, text, pictures, videos, etc.

It should be noted that an I/O device may be both an input device and an output device for the communication device 500 within this context. For example, one of the input/output devices 508 may include a display configured to provide a visual output to a user. Furthermore, the display may include a touch screen display that is configured to receive input from the user interacting with the display. The contact interaction from the user may be detected by a touch input unit. The touch input unit may be configured to detect the interaction of the user with the display via a contact of the user. The touch input unit may be configured to detect contact and/or movement of the user (e.g. via a finger, via a stylus, etc.,) while touching the display. Alternatively, the touch input unit may be configured to detect the interaction of the user via another defined surface. For example, the touch input may include a touchpad that is configured to receive input from the user. Accordingly, such a display may be both an example of an input device and an output device.

The communication device may further include an audio interface 504. The audio interface 504 may be coupled to the processor 501 and adapted to provide output as an electrical signal representation of an audible signal (i.e. audio signal) or receive electrical signals representing an audible signal. The audio interface 504 may be, or may include, any type of interface between a designated audio input (e.g. a microphone 507, an audio input port, etc.) and the processor 501; or any type of interface between a designated audio output (e.g. a loudspeaker 506, sound drivers, etc.) and the processor 501; in order to receive audio signal to process the audio signal at least for the purpose of converting the audio signal into audio data (e.g. encoding), or, to provide an audio signal as output after processing of audio data (e.g. decoding), respectively. In various examples, the audio interface 504 may simply include wires, conductors, resistors, connectors, etc. and it may further include further active elements, such as amplifiers, filters, etc. In various aspects, the audio interface 504 may include an audio input interface to receive an audio signal from an audio input device and/or may include an audio output interface to provide an audio signal to an audio output device.

The processor 501 may be configured to control the communication interface 503 to stream audio data over a short-range wireless communication link, causing the communication interface 503 to receive short-range wireless communication signals from another communication device or to transmit short-range wireless communication signals to another communication device, in which the short-range wireless communication signals include audio data. In a receive operation, the processor 501 may decode audio data received from the another communication device to obtain an audio signal, which the processor 501 may provide the obtained audio signal to the audio interface 504. In a transmit operation, the processor 501 may encode audio signal received from the audio interface 504 into audio data to transmit the audio data to the another communication device via the communication interface 503.

The audio data may include data that is encoded according to various audio coding methods, and the processor 501 may be configured to perform audio coding/decoding methods to encode or decode audio data, such as low-complexity subband codec (SBC), MPEG-1, MPEG-2, MPEG-4, advance audio coding (AAC), etc. In various examples, especially within the context of short-range wireless communication being a BT communication, the processor 501 may be configured to stream audio data using a predefined BT profile, such as A2DP, AVCRP, HSP, and/or HFP profiles.

The processor 501 may be configured to generate audio streaming requests that is representative of a request to stream audio data to/from another communication device. The another communication device may be connected to the communication device 500 over an established short-range wireless communication link. An audio streaming request may include an identifier of the communication device 500 that may allow the another communication device to identify the communication device 500 (e.g. a Bluetooth device address, BD_ADDR, a medium access control (MAC) address). In various examples, an audio streaming request may include one or more data packets.

The processor 501 may be configured to perform communication operations in accordance with various aspects provided in this disclosure, especially associated with BT communication technology and BT devices. The processor 501 may configure the communication device 500 to operate as a primary device or a secondary device, and set connection states associated with short-range wireless communication links, as exemplary provided herein. For example, the processor 501 may set the connection state for the established short-range wireless communication links as an active mode or a low power mode (e.g. reduced duty cycle, sniff mode, subrating mode, etc.).

In various examples, the processor 501 may be configured to generate an audio streaming request based on operations associated with voice communication (e.g. an input at an application layer of the protocol stack from an application software, using application functions). In various examples, the application layer may include at least some of the operations of various BT profiles provided herein. The processor 501 may generate an audio streaming request to receive and/or make voice calls (e.g. phone calls, voice calls over an application software, etc.), to communicate with the another communication device to exchange audio, etc. The audio streaming request may include an identifier associated with other party or parties of the respective voice call (i.e. caller), such as a phone number, an internet protocol (IP) address, contact information associated with the caller (e.g. a name, a photo, a username, an email address, etc.). In various examples, the processor 501 may generate an audio streaming request based on operations associated with audio playback (e.g. an input at an application layer of the protocol stack from an application software, using application functions). Accordingly, the processor 501 may generate an audio streaming request to transfer audio data for audio playback. The audio streaming request may include information about the audio requested to be streamed with the audio streaming request (e.g. artist information, audio name, audio duration, remaining time of the audio, etc.).

In accordance with various aspects, the audio streaming request may include a request to exchange audio data using various BT profiles (e.g. A2DP, HFP, HSP, etc.) as explained herein. For example, in the case of a received voice call, the audio streaming request may include a RING alert (i.e. a RING message), an attention (AT) command, or an in-band ring tone to cause the another communication device to recognize that there is an audio streaming request. For example, in the case of an exchange of audio media, the audio streaming request may include a start streaming request associated with the A2DP profile, or an audio/video distribution transport protocol command (e.g. audio/video distribution transport protocol open command (AVDTP_OPEN_CMD), an audio/video distribution transport protocol start command (AVDTP_{_}START_CMD), of a message of one of associated Bluetooth Low Energy (BLE) Media streaming and call control protocols).

In various examples, the communication device 500 may receive request information from a first communication device, which may represent an audio streaming request received by the first communication device from a second communication device. The audio streaming request received by the first communication device from the second communication device may include an audio streaming request generated by the second communication device that is similar to the communication device 500, and include various types of information as provided herein. In various examples, the request information (e.g. information representative of at least one of the incoming call indication, the identifier of a caller, information about audio requested to be streamed with the audio streaming request, and/or the identifier of the second communication device) received from the first communication device may include the audio streaming request sent by the second communication device. In various examples, the request information may include one or more data packets.

The communication device 500 may generate response information as a response to a received audio streaming request and/or the request information, and encode the generated response information for a transmission. The processor 501 may generate the response information based on, or in response to, a received audio streaming request and/or the request information. The response information may include information representing an acceptance or a rejection of the audio streaming request that the received audio streaming request and/or the request information indicates.

In accordance with various aspects provided herein, the processor 501 may decode the received request information (or the received audio streaming request) to obtain information associated with the audio streaming request. In various examples, the processor 501 may generate visual information (e.g. an image, a text, etc.) based on the information associated with the audio streaming request to notify the user of the communication device 500 visually. The visual information may include displayable information that may be displayed by one of the I/O devices (e.g. a display) 508. In various examples, the visual information may include information representing at least one of an incoming call or outgoing call indication, an identifier of a caller, information about audio requested to be streamed with the audio streaming request, and/or an identifier of the second communication device. Accordingly, the communication device 500 may output visual information for the user to provide contextual information about the audio streaming request.

Furthermore, the processor 501 may receive inputs from the I/O devices 508 to determine a user interaction associated with the output visual information. The processor 501 may identify an interaction of the user associated with the output visual information based on received inputs from the I/O devices 508 and determine user interaction information. The user interaction information represents the input of the user with respect to the output visual information. In accordance with various aspects, the user interaction information may represent whether the user has accepted or rejected the audio streaming request.

Illustratively, the request information may include information representing an incoming call, a phone number, and contact information of a caller associated with the incoming call. Based on this particular request information, the processor 501 may generate a notification window information (e.g. an image) to be displayed on a touch screen display, and the notification window may include information representing that the second communication device, an indicator of a received incoming call, the phone number and the contact information of the caller. In various examples, the notification window may further include an interactable section to guide the user to provide an interaction associated with the notification window (e.g. a YES/NO button, etc.). The user may interact with the interactable section of the notification window by pressing one of YES or NO button. The processor 501 may identify based on input received from the touch screen display whether the user pressed YES button or NO button, and generate user interaction information representing whether the user has accepted or rejected the incoming call.

Accordingly, the processor 501 may generate the response information based on the generated user interaction information associated with the output visual information, and the response information may include information representing whether the user has accepted the audio streaming request or rejected the audio streaming request with the interaction. The processor 501 may encode the response information for a transmission to the first communication device.

In accordance with various aspects provided herein, the processor 501 may encode the response information based on a predefined BT profile associated with the communication link that the communication device 500 has received the request information. Accordingly, for example, in case the request information has included audio/video distribution transport protocol open command (AVDTP_OPEN_CMD) or an audio/video distribution transport protocol start command (AVDTP_START_CMD) or a request message of one of associated Bluetooth Low Energy (BLE) Media streaming and call control protocols, the response information may include an audio/video distribution transport protocol open response (AVDTP_OPEN_RSP), or an audio/video distribution transport protocol start response (AVDTP_START_RSP) or a response message of one of associated Bluetooth Low Energy (BLE) Media streaming and call control protocols respectively, or in case the request information has included an AT command, the response information may include an AT response command. The processor 501 may determine the corresponding BT profile based on the received request information and encode the response information in compliance to the corresponding BT profile.

In accordance with various aspects provided herein, the communication device 500 may send status information representing a state associated with the operations of the communication device 500. The processor 501 may be configured to generate the status information based on operations of the communication device 500, in various examples by exchanging information with I/O device 508, by accessing operational information in the memory 502, by exchanging information with the audio interface 504, etc.

A state may include an operational state of the communication device 500. For example, the status information may include information associated with audio connection of the communication device 500, such as type of the audio connection, or information associated with audio data being exchanged with the audio connection, such as media information associated with the audio data being exchanged (e.g. artist information, song name, song duration, remaining time of the song, etc.). For example, the status information may include information associated with the resources of the communication device 500 (e.g. a battery level, remaining battery level, whether the communication device 500 is charging or not, a signal strength indicator associated with an established communication link with another communication device).

In various examples, the status information may include information associated with audio operations performed by the communication device 500. In particular within the context that the communication device 500 is configured to perform bi-directional voice communication (e.g. via teleconferencing, videoconferencing, etc.), the status information may include information representing at least one of a presence of a call, an incoming call, a termination of a call, a state associated with a call, battery status, and/or contact information associated with a call. The state associated with the call may include a call holding state representing whether there is a call held by the communication device 500, a conference call state representing whether the communication device 500 performing operations associated with a conference call, an ongoing call state representing whether there is an ongoing call performed by the communication device 500; an outgoing call state whether there is an outgoing call performed by the communication device 500, an incoming call state representing whether there is an incoming call, and/or a state of a used audio end-point associated with a call, representing whether an audio end-point is used for a call.

In various examples, the processor 501 may generate and/or encode status information periodically, based on a predefined period set in the memory 502, or based on period information received from another communication device. In various examples, the processor 501 may generate and/or encode status information based on a request received from another communication device, or based on a detection of a predefined event at the communication device 500.

In accordance with various aspects provided herein, the communication device 500 may receive status information associated with one or more other communication devices. The processor 501 may decode received status information and generate visual information including displayable information provided by the received status information to display the information representing states of one or more other communication devices to the user.

In accordance with various aspects of this disclosure, the processor 501 may generate configuration information to configure operations of another communication device for various aspects provided herein. For example, configuration information may include information representing whether the communication device 500 receives request information or audio streaming requests from another communication device. Configuration information may include information representing a configuration associated with exchange of status information. For example, configuration information to be sent to the another communication device may include information representing whether the communication device 500 sends status information to the another communication device to be delivered by the another communication device to further communication devices, or may include information representing whether the communication device 500 receives status information of further communication devices from the another communication device. The processor 501 may generate configuration information based on user interactions representing the intention of the user with respect to the configuration.

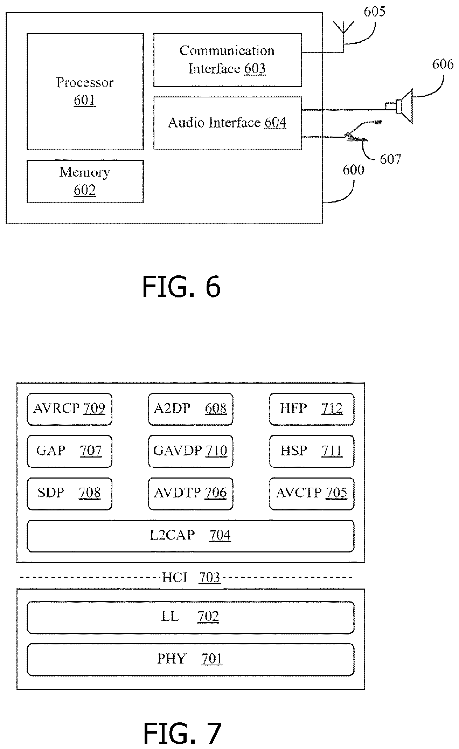

FIG. 6 shows an example of a communication device, such as an audio communication device. The communication device 600 includes a processor 601. The processor 601 may include a central processing unit, and/or a controller. The processor 601 may be implemented in one processing unit, e.g. a system on chip (SOC), or an integrated system or chip. The processor 601 may include more than one processing units configured to provide various aspects as mentioned herein.

The communication device 600 may further include a memory 602 to store data. The memory 602 may store instructions configured to manage various operations of the processor 601, the memory 602, and the communication interface 603, and may further manage operations of audio interface 604. In various examples, the communication device 600 may include a battery (not shown). The processor 601 and memory 602 (and also other various components of the communication device) and other entities may be communicatively coupled over an internal interface to communicate with each other (e.g. a bus, wires, etc.).

The communication interface 603 may cause the communication device 600 to communicate with further devices (e.g. other communication devices) over established communication links. The processor 601 may manage the communications with other communication devices for the communication device 600. The communication interface 603 various components, as exemplarily provided in accordance with FIG. 2, such as antenna system 202, radio frequency (RF) transceiver 204, baseband modem 206 (including digital signal processor 208 and protocol controller 210). The communication interface 603 may include a separate application processor, and memory, or in various examples, the processor 601 and the memory 602 may provide functions of an application processor and memory for communication purposes for one or more radio communication protocols.

In this illustrative example, the communication interface 603 may be at least configured to perform radio communication protocol according to a short-range radio communication, such as Bluetooth, WLAN, Wi-Fi Direct, WPAN, etc. In various examples, the communication device 600 may via the communication interface 603 perform communication over peer-to-peer communication, and accordingly send or receive information (e.g. signals, messages, etc.). The communication interface 603 may further be configured to communicate for further radio communication protocols. In accordance with various aspects provided herein, operations associated with the communication interface 603 or about the communication performed by the communication device 600 are explained with an illustrative example of BT communication.

The processor 601 may control communication operations to communicate with other communication devices via a plurality of short-range wireless communication links, such as BT links, via the communication interface 603. Each short-range wireless communication link may transport data between the communication device 600 and one of the other communication devices. The processor 601 may maintain the plurality of short-range wireless communication links simultaneously in order to communicate with the other communication devices. In accordance with various aspects, the processor 601 may cause the communication interface 603 to communicate using the plurality of short-range wireless communication links with a time division duplex (TDD) mechanism.

The communication device may further include an audio interface 604. The audio interface 604 may be coupled to the processor 601 and adapted to provide output as an electrical signal representation of an audible signal (i.e. audio signal) or receive electrical signals representing an audible signal. The audio interface 604 may be, or may include, any type of interface between a designated audio input (e.g. a microphone 607, an audio input port, etc.) and the processor 601; or any type of interface between a designated audio output (e.g. a loudspeaker 606, sound drivers, etc.) and the processor 601; in order to receive audio signal to process the audio signal at least for the purpose of converting the audio signal into audio data (e.g. encoding), or, to provide an audio signal as output after processing of audio data (e.g. decoding), respectively. In various examples, the audio interface 604 may simply include wires, conductors, resistors, connectors, etc. and it may further include further active elements, such as amplifiers, filters, etc. In various aspects, the audio interface 604 may include an audio input interface to receive an audio signal from an audio input device and/or may include an audio output interface to provide an audio signal to an audio output device.

The processor 601 may be configured to control the communication interface 603 to stream audio data over a short-range wireless communication link, causing the communication interface 603 to receive short-range wireless communication signals from another communication device or to transmit short-range wireless communication signals to another communication device, in which the short-range wireless communication signals include audio data. In a receive operation, the processor 601 may decode audio data received from the another communication device to obtain an audio signal, which the processor 601 may provide the obtained audio signal to the audio interface 604. In a transmit operation, the processor 601 may encode the audio signal received from the audio interface 604 into audio data to transmit the audio data to the another communication device via the communication interface 603.

In accordance with various aspects provided herein, the processor 601 may set one of the established short-range wireless communication links as an active link. Within this context, each of other established short-range wireless communication links may be considered as an established link. The processor 601 may provide audio output to the audio interface 604 (e.g. an audio output interface) based on the audio data streamed from the respective communication device that the audio communication device 603 communicates over the active link. The processor 601 may encode audio input received from an audio interface 604 (e.g. an audio input interface) to obtain audio data for a transmission to the respective communication device using the active link. In accordance with various aspects provided herein, the active link may define the established short-range wireless communication link by which the communication device 600 stream audio (i.e. transmit and/or receive audio data) actively to provide an audio output signal from an audio output based on received audio data or to send information associated with encoded audio input signal received from an audio input.

The processor 601 may configure communication operations of the active link as an active communication without any power constraints, and the processor 601 may configure communication operations of established links by causing the communication interface 603 to operate in a low-power mode for the established links. For example, in particular within the context of BT communication, when an established short-range wireless communication link is set to be the active link, the processor 601 may control the communication interface 603 to communicate using the established short-range wireless communication link with a connection state of an active mode, and when an established short-range wireless communication link is not set as the active link (i.e. an established link), the processor may control the communication interface 603 to communicate using the established short-range wireless communication with a connection state of a low-power mode.

The processor 601 may be configured to perform communication operations in accordance with various aspects provided in this disclosure, especially associated with BT communication technology and BT devices. The processor 601 may configure the communication device 600 to operate as a primary device or a secondary device, set connection states associated with short-range wireless communication links, as exemplary provided herein. For example, the processor 601 may set the connection state for the established short-range wireless communication links as an active mode or a low power mode (e.g. reduced duty cycle, sniff mode, subrating mode, etc.).

It is to be noted that an established short-range wireless communication link may be a physical communication link, and it may include a plurality of logical communication links. In accordance with various aspects provided herein, setting an established short-range wireless communication link as an active link may include setting one or more logical communication links but not all logical communication links of the established short-range wireless communication link. Accordingly, any operations defined herein associated with an active link may apply both a physical communication link or a logical communication link of a plurality of logical communication links included by a physical communication link.

The audio data may include data that is encoded according to various audio coding methods, and the processor 601 may be configured to perform audio coding/decoding methods to encode or decode audio data, such as low-complexity subband codec (SBC), MPEG-1, MPEG-2, MPEG-4, advance audio coding (AAC), etc. In various examples, especially within the context of short-range wireless communication being a BT communication, the processor 601 may be configured to stream audio data using a predefined BT profile, such as A2DP, AVCRP, HSP, and/or HFP profiles.

In various examples, the processor 601 may establish an audio connection using one of the established short-range wireless communication links that is selected as the active link. In various examples, the processor 601 may send a start streaming request, an audio stream end-point discovery request, an audio/video distribution transport protocol open command (AVDTP_OPEN_CMD), and/or an audio/video distribution transport protocol start command (AVDTP_START_CMD), and/or a request message of one of associated Bluetooth Low Energy (BLE) Media streaming and call control protocols, via the one of the established short-range wireless communication links that is selected as the active link. In various examples, the processor 601 may send an audio/video distribution transport protocol open response (AVDTP_OPEN_RSP), an audio/video distribution transport protocol start response (AVDTP_START_RSP), and/or an AT command and/or a response message of one of associated Bluetooth Low Energy (BLE) Media streaming and call control protocols via the one of the established short-range wireless communication links that is selected as the active link, as a response to a previously received message over the one of the established short-range wireless communication links that is selected as the active link.

In accordance with various aspects provided herein, the communication interface 603 may stream audio from and/or to a first communication device via a first established short-range wireless communication link that is set as the active link, while the communication interface may receive and/or send information to other communication devices via further established short-range wireless communication links (i.e. further established links) respectively. The communication device 600 may receive an audio streaming request from a second communication device via a second short-range wireless communication link between the communication device 600 and the second communication device, in which the second short-range wireless communication link between the communication device 600 and the second communication device is not the active link (i.e. is an established link).

In accordance with various aspects provided herein, the communication device 600 may communicate with a respective communication device of which the established short-range wireless communication link in-between is set as the active link (e.g. the first communication device) with a connection state of an active mode, and may communicate with further communication devices of which the established short-range wireless communication links in-between are set as established links (e.g. the second communication device) with a connection state of a lower power mode. The lower power mode may include a mode in which the duty cycle associated with the communication is lower than the duty cycle associated with the communication using the active link. The lower power mode may be a sniff mode, a reduced duty cycle mode, or a subrating mode. The processor 601 may maintain the connection states of the established links as connection states of a lower power mode when there is an established short-range wireless communication link set as an active link. In accordance with various aspects, the processor 601 may also set an established link as the active link by changing the connection state associated with the established link that was in a lower power mode to an active mode.

The processor 601 may decode the audio streaming request. The audio streaming request may represent an intention and/or a request of the second communication device to stream audio. An audio streaming request may include an identifier of the communication device 600, an identifier of the second communication device making the audio streaming request that may allow the communication device 600 to identify the second communication device (e.g. a Bluetooth device address, BD_ADDR, a medium access control (MAC) address). In various examples, an audio streaming request may include one or more data packets.

Considering that the second communication device may have generated the audio streaming request based on operations associated with voice communication (e.g. an input at an application layer of the protocol stack from an application software, using application functions) in order to receive and/or make voice calls (e.g. phone calls, voice calls over an application software, etc.) or based on operations associated with audio playback (e.g. an input at an application layer of the protocol stack from an application software, using application functions) initiated by the second communication device, for the purpose of communicating with the communication device 600 to exchange audio, the audio streaming request may include an identifier associated with other party or parties of the respective voice call (i.e. caller) received by the second communication device, such as a phone number, an internet protocol (IP) address, contact information associated with the caller (e.g. a name, a photo, a username, an email address, etc.), or may include information about audio requested to be streamed with the audio streaming request (e.g. artist information, audio name, audio duration, remaining time of the audio etc.).

In accordance with various aspects, the audio streaming request may include a request to exchange audio data using various BT profiles (e.g. A2DP, HFP, HSP, etc.) as explained herein. For example, in the case of a received voice call, the audio streaming request may include a RING alert (i.e. a RING message), an attention (AT) command, or an in-band ring tone to cause the communication device 600 to recognize that there is an audio streaming request. For example, in the case of an exchange of audio media, the audio streaming request may include a start streaming request associated with the A2DP profile, or an audio/video distribution transport protocol command (e.g. audio/video distribution transport protocol open command (AVDTP_OPEN_CMD), an audio/video distribution transport protocol start command (AVDTP_START_CMD), or a message of one of associated Bluetooth Low Energy (BLE) Media streaming and call control protocols).

The processor 601 may encode request information for a transmission to the first communication device having an audio streaming relation via the active link to indicate that the communication device 600 has received an audio streaming request. The processor 601 may encode the request information based on the received audio streaming request. In accordance with various aspects provided herein, the communication device 600 may pass through the audio streaming request received from the second communication device to the first communication device. The request information may include the audio streaming request received from the second communication device. The request information may include contextual information associated with the audio streaming request received from the second communication device to stream audio, or information representative of at least one of the incoming call indication, the identifier of a caller, information about audio requested to be streamed with the audio streaming request, and/or the identifier of the second communication device. The request information may include any one of information that is exemplary provided with respect to an audio streaming request as defined herein.

In various examples, the processor 601 may, within the context of BT communication, apply various functions associated with the BT protocol stack to decode one or more packets associated with the received audio streaming request up to a predefined layer of the BT protocol stack, in which the predefined layer is a layer between the physical layer and the application layer of the BT protocol stack, and encode packets based on obtained packets of the predefined layer associated with the decoded one or more packets. Illustratively, the processor 601 may decode the audio streaming request to obtain one or more data packets at L2CAP layer or at link layer, and then the processor 601 may encode the request information by encoding the obtained one or more data packets at the L2CAP layer or at the link layer.

The communication device 600 may transmit the encoded request information to the first communication device. The communication device 600 may transmit the encoded request information to the first communication device via the first established wireless communication link, that is set as the active link, or via a further established wireless communication link between the first communication device and the communication device 600. As a response to the transmitted encoded request information, the communication device 600 may receive response information from the first communication device. The response information may represent a received user interaction by the first communication device based on the encoded request information, as exemplarily disclosed in accordance with FIG. 5.

Based on the received response information from the first communication device, the processor 601 may set the second established wireless communication link as the active link to stream audio from and/or to the second communication device. In various examples, the processor 601 may establish a further short-range wireless communication link with the second communication device, and set the further established short-range wireless communication link as the active link to stream audio to and/or from the second communication device. Accordingly, the processor 601 may provide audio output to the audio interface 604 based on audio data received from the second communication device via the second established short-range wireless communication link (or the further established short-range wireless communication link), and additionally, or alternatively, the processor 601 may encode audio input received from the audio interface 604 to obtain audio data and transmit the audio data to the second communication device via the second established short-range wireless communication link (or the further established short-range wireless communication link), as the second established short-range wireless communication link (or the further established short-range wireless communication link) has been set as the active link.

In various examples, the processor 601 may further encode audio streaming response information to be transmitted to the second communication device based on the received response information. The audio streaming response information may include information representing either an acceptance or a rejection of the audio streaming request sent the by second communication device based on the response information received from the first communication device. In various examples, the audio streaming response information may include at least one of an audio/video distribution transport protocol open response (AVDTP_OPEN RSP), an audio/video distribution transport protocol start response (AVDTP_START_RSP), an AT command representative of answering or rejecting the call, or a message of one of associated Bluetooth Low Energy (BLE) Media streaming and call control protocols.

In accordance with various aspects provided herein, the communication device 600 may, via the communication interface 603, receive status information representing one or more states associated with the operations of the other communication devices that are connected to the communication device 600 via the plurality of established short-range wireless communication links and send status information received from one of the communication devices to another one or more other communication devices. In various examples, the processor 601 may be configured to pass through status information received from one communication device to other communication devices by performing similar functions as provided herein with respect to passing through the audio streaming request. In various examples, the memory 602 may store status information received from communication devices, and the processor 601 may encode stored status information for a communication device for transmission to other communication devices.

A state may include an operational state of other communication devices. For example, the status information may include information associated with audio connection of another communication device connected to the communication device 600, such as type of the audio connection, or information associated with audio data being exchanged with the audio connection, such as media information associated with the audio data being exchanged (e.g. artist information, song name, song duration, remaining time of the song etc.). For example, the status information may include information associated with the resources of the another communication device connected to the communication device 600 (e.g. a battery level, remaining battery level, whether another communication device connected to the communication device 600 is charging or not, a signal strength indicator associated with the established short-range wireless communication link between the respective communication device and the communication device 600).

In various examples, the status information may include information associated with audio operations performed by another communication device connected to the communication device 600. In particular, within the context that another communication device connected to the communication device 600 is configured to perform bi-directional voice communication (e.g. via teleconferencing, videoconferencing, etc.), the status information may include information representing at least one of a presence of a call, an incoming call, a termination of a call, a state associated with a call, battery status, and/or contact information associated with a call. The state associated with the call may include a call holding state representing whether there is a call held by the another communication device connected to the communication device 600, a conference call state representing whether the another communication device connected to the communication device 600 performing operations associated with a conference call, an ongoing call state representing whether there is an ongoing call performed by the another communication device connected to the communication device 600; an outgoing call state whether there is an outgoing call performed by the another communication device connected to the communication device 600, an incoming call state representing whether there is an incoming call, and/or a state of a used audio end-point associated with a call, representing whether an audio end-point is used for a call.

In various examples, the communication device 600 may receive and/or send status information periodically, based on a predefined period set in the memory 602, or based on period information received from another communication device. In various examples, the processor 601 may decode and/or encode status information based on a request received from another communication device, or based on a detection of a predefined event at the communication device 600.

In accordance with various aspects provided herein, the communication device 600 may receive status information associated with one or more other communication devices. The processor 601 may decode the received status information of a communication device and encode decoded status information of the communication device for transmission to other communication devices of the plurality of communication devices.

In accordance with various aspects of this disclosure, the processor 601 may receive configuration information from each one of the other communication devices in order to configure operations of the communication device for various aspects provided herein. For example, the configuration information may include information representing whether a communication device may receive (i.e. desires to receive) request information or audio streaming requests associated with other communication devices. The configuration information may include information representing a configuration associated with the exchange of status information.

For example, configuration information received from one of the other communication devices may include information representing whether the respective communication device may send status information for the purpose of forwarding the sent status information to other communication devices connected to the communication device 600 (e.g. whether other communication devices may access the status information provided by the respective device). Configuration information received from a communication device may include information representing whether the respective communication device may receive (e.g. desires to receive) status information of other communication devices connected to the communication device 600.

The memory 602 may be configured to store forwarding status information comprising information, for each communication device that is connected to the communication device 600, that is representative of whether the respective communication device is configured to, and/or desires to, and/or adapted to at least one of: i) to receive request information from the communication device 600, ii) to provide an audio streaming request to the communication device 600, iii) to receive status information of other communication devices that the communication device 600 receives, iv) to send status information of the respective communication device to the communication device 600, and/or v) to allow the sent status information of the respective communication device to be transmitted to other communication devices connected to the communication device 600. In various examples, the forwarding status information may, for each communication device that is connected to the communication device 600, further include an identifier of each other communication devices that the respective communication device allows the status information to be shared with.

In accordance with various aspects provided herein, the processor 601 may encode information to be exchanged with the other communication devices, such as the request information, and/or the response information, and/or status information, and/or audio streaming request, etc. based on the forwarding status information representing which information is to be provided to the respective communication device and which information is expected from the respective communication device.

Illustratively, when the processor 601 decodes an audio streaming request, the processor 601 may determine whether to encode request information or/not based on the forwarding status information associated with the configuration of the communication device having the active link, and if the forwarding status information indicates that the communication device having the active link does not desire to receive request information, the processor 601 may not encode request information, and may encode audio streaming response information to the communication device sending the audio streaming request, the audio streaming response information may represent the rejection of the audio streaming request. Similarly, the processor 601 may encode and/or cause the communication interface 603 to send status information received from one communication device to another communication device based on corresponding forwarding status information associated with the one communication device and the another communication device.

FIG. 7 shows an exemplary illustration of a protocol stack according to BT communication protocol in a generalized manner that may be applicable to both BR/EDR BT and BT LE technologies. In accordance with various aspects provided herein, a processor of a communication device (e.g. the communication device 500, the communication device 600) configured to communicate using a BT communication protocol may be configured to perform various operations provided herein. Each layer of the BT protocol stack provides various functions to provide services as exemplary provided in this disclosure. BT protocol stack includes a controller layer defining lower layers of the BT protocol stack, a host layer defining upper layer of the BT protocol stack, and an application layer (not shown) providing an interface between user applications and the BT protocol stack.

It is to be noted that the BT protocol stack supports various use cases applicable to various scenarios, and for this reason, the illustrated BT protocol stack has certain constraints that the skilled person would immediately recognize. In particular, within the consideration of different deployment scenarios associated with BT profiles within the BT protocol stack, that each BT profile may depend on further profiles and may depend on functions provided by different layers of the BT protocol stack, the illustrated BT protocol stack is provided to disclose various functions associated with the respective entities provided in the BT protocol stack. The skilled person would also recognize that the illustrated BT protocol stack does not include each entity that the BT protocol stack includes which may include layer entities between the layers in the illustrated BT protocol stack, or the illustrated BT protocol stack does not fully explain layer orderings or all layer relations within the BT protocol stack. It is to be further noted that BT profiles include optional protocols that are not defined within the core BT protocol stack, and they may generally be positioned at the application layer of the BT protocol stack. The illustrated BT protocol stack includes BT profiles.

The controller layer includes a physical (PHY) layer 701, and the processor may be configured to perform PHY functions including modulation/demodulation, channel coding/decoding, etc. according to the PHY layer 701. PHY functions may include functions associated with physical BT channel characteristics, to transmit and receive packets on the physical BT channel via physical communication links between BT devices. The PHY layer 701 illustrated herein may include LE PHY layer for BT LE and Radio layer and a portion of Baseband layer for BR/EDR BT.

The controller layer further includes a link layer (LL) 702, and the processor may be configured to perform LL functions according to the LL layer 702 which includes control of access, in particular, advertising, scanning, establishing and maintaining connections, interfacing with the PHY layer 701, and defining a role for the respective BT communication device. The LL layer 702 illustrated herein may include link layer for BT LE and the remaining portion of Baseband layer and a Link Manager layer for BR/EDR BT. The LL functions may also include functions to encode and/or decode of BT packets from the payload. The LL functions may further include control operations associated with establishing logical communication links and maintaining the links to enable communication between BT devices. In accordance with various aspects provided herein, a BT communication device may use the LL functions to control operations for management of established links and provide signaling between BT communication devices to control operations related to the capability of the device to set active links by which a BT communication device may stream audio.

Furthermore, a host controller interface (HCI) layer 703 is provided between the controller layer and the host layer. The HCI layer 703 is configured to provide communication between the controller layer and the host layer through standard interface types. The HCI layer 703 can be implemented using application programming interfaces (API) or other interfaces such as universal asynchronous transmitter-receiver (UART) interface, universal serial bus (USB) interface, or serial peripheral interface (SPI). The HCI layer 703 is an optional layer.

The host layer includes a logical link control and adaptation protocol (L2CAP) layer 704, and the processor may be configured to perform L2CAP functions according to L2CAP layer 704, which may include encapsulation/decapsulation of BT packets (e.g. segmentation of service data units (SDUs) into protocol data units (PDUs), fragmentation of PDUs into data packets), functions to provide adaptation between upper layers and lower layers, establish and maintain logical connections in L2CAP level between BT communication devices (as L2CAP channels), quality of service (QoS) implementation, etc.

The host layer may further include Audio/Video Control Transport Protocol (AVCTP) layer 705, and the processor may be configured to perform AVCTP functions according to the AVCTP layer 705. AVCTP functions may include transporting command and response information (i.e. messages) for controlling audio and video features of BT communication devices, in particular with the involvement of AVRCP functions. In particular, a BT communication device may use AVCTP functions to exchange messages with another BT communication device to control various operations associated with audio streaming, in accordance with various aspects provided herein.

The host layer further includes an attribute protocol/generic attribute protocol (ATT/GATT) layer (not shown), and the processor may be configured to perform ATT/GATT functions that may include the transfer of attribute data between clients and servers in GATT, defining the role of a client or a server for a BT communication device, and organizing data into various attributes, handling data communications over an established connection, such as commands and requests toward the server and receiving responses, indications, and notifications from a server, accepting received commands and requests and sending responses, indications, and notifications from a server.

The host layer may further include an audio video distribution transport protocol (AVDTP) layer 706, and the processor may be configured to perform AVDTP functions that may include audio/video (A/V) stream negotiation, A/V stream establishment, and A/V transmission functions. In accordance with various aspects provided herein, the processor may perform AVDTP functions to stream audio. In scenarios involving streaming audio using AVDTP functions, the processor may stream audio and control operations to establish streaming using L2CAP data packets. Such L2CAP data packets may include information (e.g. a protocol/service multiplexer value) representing L2CAP data packets used for audio streaming. Accordingly, logical channels associated with streaming audio may include L2CAP channels.

In accordance with various aspects provided herein, the processor may generate and/or may encode an audio streaming request by performing AVDTP functions, the processor may generate and/or may encode request information or response information by performing AVDTP functions as well. In accordance with various aspects provided herein, the processor may perform AVDTP functions to set or release an active link, or the processor of a BT communication device may perform AVDTP functions in response to a received response information from a first BT communication device to stream audio from a second communication device.

The host layer may further include a generic access profile (GAP) layer 707, and the processor may be configured to perform GAP functions according to the GAP layer 707. GAP functions may include device discovery, controlling connections of the respective BT communication device, and advertising. The host layer may further include a service discovery protocol (SDP) layer configured to perform SDP functions. SDP functions may include providing a discovery mechanism between BT communication devices in order to identify which services are available. In accordance with various aspects provided herein, a BT communication device may perform an SDP query associated with a service to stream audio before sending an audio streaming request to identify further BT communication devices with which an audio streaming relation may be established within a BT network, or to identify contents of an audio streaming request.

The host layer may further include Audio/Video Remote Control Profile (AVRCP) 709, and the processor may be configured to perform AVRCP functions according to the AVRCP 709. Some of the AVRCP 709 functions may depend on the GAP functions. AVRCP functions may include audio/video control functions in audio/video distribution scenarios. In accordance with various aspects provided herein, a BT communication device may use AVRCP functions to control operations related to streamed audio. For example, in response to received information from a first BT communication device, a BT communication device may use AVRCP functions to control audio currently streamed by a second BT communication device. For example, in response to received response information representing an acceptance of an audio streaming request of a second BT communication device, a BT communication device may control a first BT communication device that has sent the response information by issuing a command to stop or pause the audio streamed by the first BT communication device before accepting the audio streaming request of the second BT communication device.

The host layer may further include a Generic Audio/Video Distribution Profile (GAVPD) 710, and the processor may be configured to perform GAVPD functions according to the GAVPD 710. GAVPD functions may include functions associated with setting up streaming channels used to support A/V distribution. GAVPD functions may include streaming audio using ACL links established between BT communication devices. In accordance with various aspects provided herein, the processor may generate and/or may encode an audio streaming request by performing GAVPD functions, the processor may generate and/or may encode request information or response information by performing GAVPD functions as well.

In accordance with various aspects provided herein, the processor may perform GAVPD functions to set or release an active link, or the processor of a BT communication device may perform GAVPD functions in response to received response information from a first BT communication device to stream audio from a second communication device. The processor may encode or decode an audio streaming request via GAVPD functions. The processor may encode or decode request information or response information via GAVPD functions. In particular, in accordance with various aspects provided herein, an established link may include a connection state associated with the respective BT communication link, in which the connection state is idle or open, and an active link may include a connection state of streaming. In accordance with various aspects provided herein, the processor may encode a start streaming request or decode a start streaming request using the GAVPD functions.

The host layer may further include a headset profile (HSP) 711, and the processor may perform HSP functions based on the HSP 711. HSP functions may include functions related to stream audio using a full-duplex audio connection, in which the audio is streamed bi-directionally between BT communication devices. The HSP supports streaming audio using SCO links. Furthermore, the processor may send or receive information using attention (AT) commands, and RING alerts representing a received incoming call using HSP functions.

In accordance with various aspects provided herein, the processor may perform HSP functions to set or release an active link, or the processor of a BT communication device may perform HSP functions in response to received response information from a first BT communication device to stream audio from a second communication device. The processor may encode or decode an audio streaming request via HSP functions. The processor may encode or decode request information or response information via HSP functions. In particular, in accordance with various aspects provided herein, the processor may generate, encode and/or decode an audio streaming request using HSP functions. The audio streaming request may include a RING alert obtained using HSP functions in response to an incoming call, and the processor may further encode AT commands associated with an identifier of a caller, phone number of the caller, etc. using the HSP functions.

The host layer may further include a hands-free profile (HFP) 712 and the processor may perform HFP functions based on the HFP 712. HFP functions may include, in particular for a BT communication device that is a mobile phone, to stream audio and exchange information associated with control of audio. The HFP functions may include streaming audio using SCO links. Furthermore, the processor may send or receive information using attention (AT) commands, and RING alerts representing a received incoming call using HFP functions.

In accordance with various aspects provided herein, the processor may perform HFP functions to set or release an active link, or the processor of a BT communication device may perform HFP functions in response to received response information from a first BT communication device to stream audio from a second communication device. The processor may encode or decode an audio streaming request via HFP functions. The processor may encode or decode request information or response information via HFP functions. In particular, in accordance with various aspects provided herein, the processor may generate, encode and/or decode an audio streaming request using HFP functions. The audio streaming request may include a RING alert obtained using HFP functions in response to an incoming call, and the processor may further encode AT commands associated with an identifier of a caller, phone number of the caller, etc. using the HFP functions.

The host layer may further include an Advanced Audio Distribution Profile (A2DP) 713, and the processor may perform A2DP functions based on the A2DP 713. A2DP functions may include functions to support audio streaming, in particular associated with streaming audio for playback. In accordance with various aspects provided herein, the processor may perform A2DP functions to set or release an active link, or the processor of a BT communication device may perform A2DP functions in response to received response information from a first BT communication device to stream audio from a second communication device. The processor may encode or decode an audio streaming request via A2DP functions. The processor may encode or decode request information or response information via A2DP functions. In particular, in accordance with various aspects provided herein, the processor may generate, encode and/or decode an audio streaming request using A2DP functions. The audio streaming request may include information about the audio to be streamed using A2DP functions.

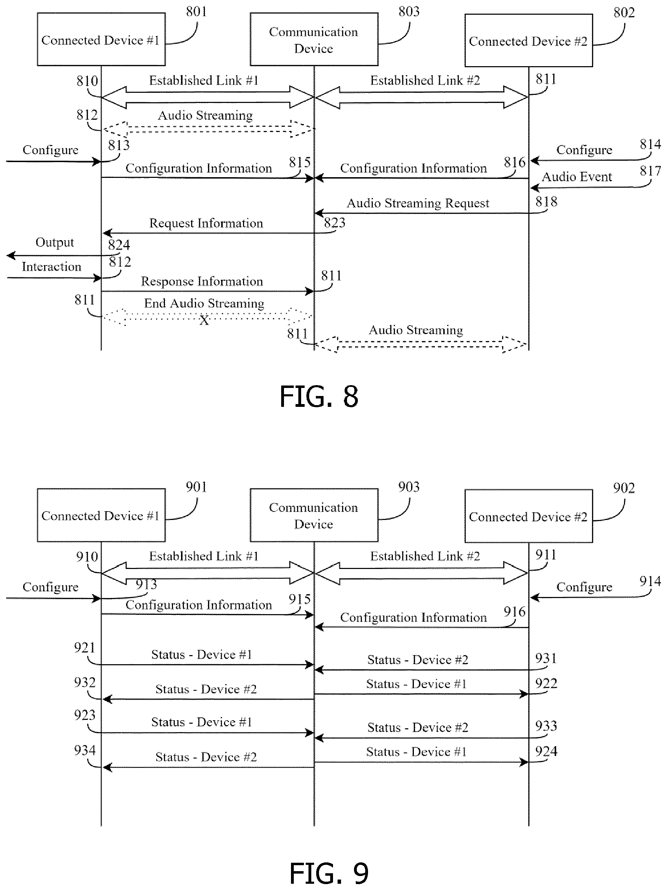

FIG. 8 shows exemplary procedures associated with audio streaming in accordance with various aspects of this disclosure, including exchange of information between a first connected device 801 (e.g. the communication device 500), a second connected device 802 (e.g. the communication device 500), and a communication device 803 (e.g. the communication device 600). For example, each of the first connected device 801 and/or the second connected device 802 may be a user communication device including a user interface coupled to a display and various input devices allowing a user to interact with the respective devices. In various examples, at least the first audio device 801, and optionally the second audio device 802 may be, or may include, a computer, a mobile phone, a television, a domotics device, a wearable device, an entertainment device (e.g. home entertainment, in-vehicle entertainment), or an electronic device having a user interface to interact with a user via inputs (e.g. an input device such as a keyboard) and outputs (e.g. an output device such as a display to output information) and a short-range wireless communication interface for communication. In various examples, the communication device 803 may be, or may also include, a computer, a mobile phone, a television, a domotics device, a wearable device, an entertainment device, or an electronic device having a user interface to interact with a user via inputs and outputs and a short-range wireless communication interface for communication, a wireless headphone, a wireless headset, a wireless earphone, a wireless earbud, a true wireless (TWS) ear device, a wireless speaker, or any audio device having an audio output device (e.g. a speaker) and/or an audio input device (e.g. a microphone), and a short-range wireless communication interface.

The employment of a short-range wireless communication technology may implement at least various aspects of this procedure. Within this illustrative example, the examples are provided for a scenario that the short-range wireless communication technology is a Bluetooth (BR/EDR, LE, etc.) technology. Accordingly, the first connected device 801, the second connected device 802, and the communication device 803 may communicate based on BT communication protocol, according to BT communication protocol by transmitting and/or receiving BT signals. The communication device 803 may perform multipoint connections, in other words the communication device 803 may maintain multiple physical BT links with multiple BT devices simultaneously.

In this illustrative example, the communication device 803 may be communicatively coupled to the first connected device 801 via a first established communication link 810 and the communication device 803 may be communicatively coupled to the second connected device 802 via a second established communication link 811. In various examples, a communication network (e.g. a piconet) may include the first connected device 801, the second connected device 802, and the communication device 803, and each device of the communication network may be connected to the physical channel of the communication network. The communication device 803 may be a primary device of the communication network. The communication device 803 may have performed communication operations to establish the physical communication links 810, 811 based on the BT communication protocol. In various examples, the established communication links 810, 811 may include a physical communication link, and/or a logical communication link associated with various operations provided herein. In various examples, a physical communication link may include one or more logical communication links.

The communication device 803 may stream audio over an established communication link with another communication device. In various examples, the communication device 803 may be, or may take a role of, a source device or a source device. A source device may stream audio data over an established communication link to a sink device, so that the sink device may receive the audio data. A sink device may stream audio data over an established communication link from a source device, so that the sink device may process audio data received from the source device. Accordingly, the first connected device 801 and the second connected device 802 may be, or may take a role of, a sink device or a source device that is the opposite role of the audio communication device.

Each device may operate as a sink device or a source device for a designated service, a designated audio channel, and/or a designated audio connection. For example, in a scenario in which a bi-directional audio transfer is intended, a device may operate as a sink device to steam audio in a direction, while the same device may operate as a source device to stream audio in another direction. Illustratively, a headset device may operate as a sink device to receive audio data provided by another device to output audio via sound drivers, while the headset device may also operate as a source device (in the same time period) to transmit audio data, which the headset device obtains by processing audio received from a microphone, to the another device.

In this example, the first established communication link 810 may transport data bi-directionally between the communication device 803 and the first connected device 801. The first established communication link 810 may allow the communication device 803 and the first connected device 801 to stream audio 812 from/to each other. Any one of the communication device 803 or the first connected device 801 may initiate the audio streaming 812 depending on the use case. In this illustrative example, the communication device 803 may receive audio data from the first connected device 801 via the first established communication link 810, decode the audio data to obtain an audio signal, and provide the audio signal as an audio output to an audio interface to provide an audible output (e.g. via sound drivers). Furthermore, the audio interface of the communication device 803 may receive an audible input from an audio input device (e.g. a microphone), encode audio data based on the received audible input, and send the encoded audio data to the first connected device 801 via the first established communication link 810.

In accordance with various aspects provided herein, the established communication link via which the communication device 803 streams audio data in that the communication device 803 provides audible output based on received audio data, or that the communication device 803 receives an audio signal from an audio interface to send audio data, is defined by an active link. Accordingly, with the audio streaming operation 812 between the first connected device 801 and the communication device 803, the communication device 803 may set the first established link 810 as the active link, that the communication device 803 may actively use to stream audio for the purpose of providing output or sending audio data based on the received audio signal.

Within the context of BT communication, the communication device 803, the first connected device 801, and the second connected device 802 may operate according to various profiles and protocols, some of which are mentioned in this disclosure (e.g. A2DP, HFP, HSP, GAVDP, etc.) to transfer audio. In various examples, one logical communication link associated with an established communication link may transport the bi-directional audio streams between devices. In various examples, the first established communication link 810 and the second established communication link 811 may allow transport of audio data bi-directionally in separate logical communication links. Accordingly, the first established communication link 810 may include multiple logical communication links to allow bi-directional audio streaming. For example, the communication device 803 may send audio data to the first connected device 801 using a first logical communication link of the first established communication link 810, and the communication device 803 may receive audio data from the first connected device 802 using a second logical communication link of the first established communication link 810.

Illustratively in a scenario in which the communication device 803 is a headset, with the employment of the audio streaming 812, a user associated with the headset may hear audio that the first connected device 801 sends to the headset, while the microphone of the headset receives the voice of the user and the headset may send audio data including the voice of the user to the first connected device 801.

In various examples, a processor of the first connected device 801 and a processor of the second connected device 802, may configure each device 801, 802 respectively to subscribe to the procedure as explained below. The first connected device 801 may subscribe in response to a received user interaction 813 received by the first connected device 801. The second connected device 802 may subscribe in response to a separate user interaction 814 received by the second connected device 802. Accordingly, the first connected device 801 may send configuration information 815 representing that the first connected device 801 may receive request information from the communication device 803, which the request information is associated with an audio streaming request of another device connected to the communication device 803. The second connected device 801 may send another configuration information 816 representing that the second connected device 801 may send audio streaming requests to the communication device 803.

In various examples, configuration information 815, 816 may, alternatively or additionally, represent a configuration of a connected device to receive status information from the audio communication device, which the status information is associated with states of further connected devices that are connected to the communication device 803.

In this example, the communication device 803 receives a first configuration information 815 sent by the first connected device 801, which the first configuration information 815 represents that the first connected device 801 may receive request information associated with an audio streaming request of further devices that are connected to the communication device 803, and that the first connected device 801 may receive status information associated with the further devices, and that the first connected device 801 may send status information of the first connected device 801 to the communication device 803 to be transmitted to the further devices. Similarly, the communication device 803 receives a second configuration information 816 sent by the second connected device 802, which the second configuration information 816 represents that the second connected device 802 may send audio streaming requests to the communication device 803, and that the second connected device 802 may receive status information associated with further devices, and that the second connected device 802 may send status information of the second connected device 802 to the communication device 803 to be transmitted to further devices.

A memory of the communication device 803 may be configured to store forwarding status information for each connected device based on configuration information received from a respective connected device. Accordingly, the processor of the communication device 803 may set forwarding status information associated with the first connected device 801 based on the first configuration information 815, and set forwarding status information associated with the second connected device 802 based on the second configuration information 816. Accordingly, the processor of the communication device 803 may perform the above-mentioned acts based on the forwarding status information in the memory.

In this illustrative example, the second connected device 802 may encounter an audio event 817. The processor of the second connected device 802 may detect the audio event by a signaling at an application layer. For example, the audio event may be an audio streaming request received at the application layer by an audio application, such as a music software, a teleconference software, a videoconference software. The audio event may be an incoming call or an outgoing call request. In response to the audio event, the processor of the second connected device 802 may generate and/or encode an audio streaming request 818 and send the audio streaming request 818 to the communication device 803.

The communication device 803 may receive the audio streaming request, and in response to receiving the audio streaming request, the communication device 803 may send request information 819 to the first connected device 801, which the request information 819 may represent the audio streaming request received from the second connected device 802. In various examples, the processor of the communication device 803 may determine to generate and/or encode the request information 819, or to send the request information, based on the forwarding status information associated with the first connected device 801 and the second connected device 802. In various examples, the request information 819 may include displayable information associated with the audio streaming request, such as text, image, or a plurality of images, which may include an identifier for the second connected device, an identifier of the caller, or an addressee of an outgoing call, etc.

The first connected device 801 may receive the request information 819 and output 820 a visual notification for the user of the first connected device 801. The visual notification may include the displayable information provided by the request information 819. Accordingly, the user may decide whether to allow or cause the communication device 803 to stream audio over the second established communication link 811, and an input device of the first connected device 801 may receive an interaction 821 of the user representing the decision of the user. Illustratively, in response to received request information 819, the first connected device 801 may display information associated with the audio streaming request received by the audio communication device that was indicated with the request information, such as an incoming call screen, with contact information of the caller of the incoming call at the second connected device 802 to the user, and the user may touch "Accept" button on the touch-screen display.

Based on the interaction 821 of the user, the processor of the first connected device 801 may generate and/or encode response information 822 representing the interaction of the user according to the output 821 that is based on the request information 819. The first connected device 801 may send the response information 822 to the communication device 803.

The communication device 803 may receive the response information 822 and based on the response information 822, the processor of the communication device 803 may set the second established communication link 811 as the active link that the communication device 803 may actively use to stream audio to provide output or send audio data based on received audible input. The processor of the communication device 803 may set the first established communication link 810 as an established link, or may release the status of the first established communication link 810 as the active link. In various examples, the processor of the communication device 803 or the first connected device 801 may end the audio streaming 823 in order to release the active link status of the first established communication link 810.

Furthermore, any one of the communication device 803 or the first connected device 801 may initiate the audio streaming 824 depending on the use case, but exemplarily, the communication device 803 may initiate the audio streaming 824 with the second connected device 802. In this illustrative example, with the initiation of the audio streaming 824, or by setting the second established communication link 811 as the active link, the communication device 803 may receive audio data from the second connected device 802 via the second established communication link 811, decode the audio data to obtain an audio signal, and provide the audio signal as an audio output to an audio interface to provide an audible output (e.g. via sound drivers). Furthermore, the audio interface of the communication device 803 may receive an audible input from an audio input device (e.g. a microphone), encode audio data based on the received audible input, and send the encoded audio data to the second connected device 802 via the second established communication link 811.

FIG. 9 shows exemplary procedures associated with the exchange of status information representing states of connected devices in accordance with various aspects of this disclosure, including the exchange of information between a first connected device 901 (e.g. the first connected device 801), a second connected device 902 (e.g. the second connected device 802), and a communication device 903 (e.g. the communication device 803). Any of the first connected device 901, the second connected device 902, and the communication device 903 may be configured to implement the procedure associated with the exchange of status information together with the procedure associated with audio streaming as provided with respect to FIG. 8.

Each of the first connected device 901 and/or the second connected device 902 may be a user communication device including a user interface coupled to a display and various input devices allowing a user to interact with the respective devices. In various examples, at least the first audio device 901, and optionally the second audio device 902 may be, or may include, a computer, a mobile phone, a television, a domotics device, a wearable device, an entertainment device (e.g. home entertainment, in-vehicle entertainment), or an electronic device having a user interface to interact with a user via inputs (e.g. an input device such as a keyboard) and outputs (e.g. an output device such as a display to output information) and a short-range wireless communication interface for communication. In various examples, the communication device 903 may be, or may also include, a computer, a mobile phone, a television, a domotics device, a wearable device, an entertainment device, or an electronic device having a user interface to interact with a user via inputs and outputs and a short-range wireless communication interface for communication, a wireless headphone, a wireless headset, a wireless earphone, a wireless earbud, a true wireless (TWS) ear device, a wireless speaker, or any audio device having an audio output device (e.g. a speaker) and/or an audio input device (e.g. a microphone), and a short-range wireless communication interface.

The employment of a short-range wireless communication technology may implement at least various aspects of this procedure. Within this illustrative example, the examples are provided for a scenario where the short-range wireless communication technology is a Bluetooth (BR/EDR, LE, etc.) technology. Accordingly, the first connected device 901, the second connected device 902, and the communication device 903 may communicate based on BT communication principals, according to BT communication protocol by transmitting and/or receiving BT signals. The communication device 903 may perform multipoint connections, in other words, the communication device 903 may maintain multiple physical BT links with multiple BT devices simultaneously.

In this illustrative example, the communication device 903 may be communicatively coupled to the first connected device 901 via a first established communication link 910 and the communication device 903 may be communicatively coupled to the second connected device 902 via a second established communication link 911. In various examples, a communication network (e.g. a piconet) may include the first connected device 901, the second connected device 902, and the communication device 903, and each device of the communication network may be connected to the physical channel of the communication network. The communication device 903 may be a primary device of the communication network. The communication device 903 may have performed communication operations to establish the physical communication links 910, 911 based on the BT communication protocol. In various examples, the established communication links 910, 911 may include a physical communication link, and/or a logical communication link associated with various operations provided herein. In various examples, a physical communication link may include one or more logical communication links. In various examples, one of the established communication links 910, 911 may be set as an active link in accordance with various aspects provided herein.

In various examples, one logical communication link associated with an established communication link may transport the bi-directional exchange of status information between devices. In various examples, the first established communication link 910 and the second established communication link 911 may allow transport of status information bi-directionally in respective logical communication links designated for bi-directional exchange of status information.

In various examples, each of the first established communication link 910 and the second established communication link may include more than one logical communication links. Accordingly, the first established communication link 910 may include multiple logical communication links, such as one logical communication link configured to send status information, and one logical communication link configured to receive status information. In particular, when there is N number of devices that are connected to the communication device 903, each established physical link between the communication device 903 and a connected device, that is connected to the audio communication device may include N-1 number of logical communication links, where each logical communication link of the N-1 logical communication links may be configured to receive status information associated with one connected device.

In various examples, a processor of the first connected device 901 and a processor of the second connected device 902, may configure each device 901, 902 respectively to subscribe to the exchange of status information procedure as explained below. The first connected device 901 may subscribe in response to a received user interaction 913 received by the first connected device 901. The second connected device 902 may subscribe in response to a separate user interaction 914 received by the second connected device 902. Accordingly, the first connected device 901 may send configuration information 915 representing that the first connected device 901 may receive status information from the communication device 903, which the status information includes information that is associated with states of connected devices that are connected to the communication device 903. The second connected device 901 may send another configuration information 916 representing that the second connected device 901 may receive status information from the communication device 903, which the status information includes information that is associated with states of connected devices that are connected to the communication device 903.

In this example, the communication device 903 receives a first configuration information 915 sent by the first connected device 901, which the first configuration information 915 represents that the first connected device 901 may receive status information associated with all connected devices that are connected to the communication device 903, and further that the first connected device 901 may send status information of the first connected device 901 to the communication device 903 to be transmitted to the further connected devices. Similarly, the communication device 903 receives a second configuration information 916 sent by the second connected device 902, which the second configuration information 916 represents that the second connected device 902 may receive status information associated with all connected devices that are connected to the communication device 903, and further that the second connected device 902 may send status information of the second connected device 902 to the communication device 903 to be transmitted to further connected devices.

A memory of the communication device 903 may be configured store forwarding status information for each connected device based on configuration information received from a respective connected device. Accordingly, the processor of the communication device 903 may set forwarding status information associated with the first connected device 901 based on the first configuration information 915, and set forwarding status information associated with the second connected device 902 based on the second configuration information 916. Accordingly, the processor of the communication device 903 may determine the routing and/or providing status information of one connected device to another connected device based on the forwarding status information in the memory.

For example, the forwarding status information associated with each connected device may include information representing an identifier for the respective connected device, a first data item (e.g. a flag, a bit, etc.) representing whether the status information of other connected devices is to be provided to the respective connected device, a second data item representing whether the status information of the respective connected device is to be provided to other connected devices. In various examples, configuration information, and also respective forwarding status information may include one or more identifiers of other connected devices, which may indicate other connected devices of which the respective connected device receives the status information, or to which the status information of the respective connected device provided.

The processor of the communication device 903 may schedule communication resources to perform communications with the first connected device 901 and the second connected device 902 to receive and forward status information between the first connected device 901 and the second connected device 902. The processor of the communication device 903 may schedule the communication resources to pass through status information between connected devices based on predefined periods, which may be the same predefined period for all connected devices, or various periods for each connected device separately.

In the case of the same predefined period, the first connected device 901 and the second connected device 902 may also be configured to perform communication operations as provided here according to the predefined period. The processor of the communication device 903 may send period information to the first connected device 901 and/or to the second connected device 902 to configure the communication with the first established communication link 910 and/or the second established communication link 911 respectively. In various examples, the processor of the communication device 903 may define time slots in which each of the first connected device 901 and/or the second connected device 902 and/or the communication device 903 may perform communication to receive and/or send status information, and communicate information indicating the defined time slots to the first connected device 901 and/or the second connected device 902.

According to this illustrative example, the first connected device 901 may send status information 921 of the first connected device 901 to the communication device 903 using a first time slot. A time slot may include one or more time slots defined according to the BT communication protocol. The communication device 903 may receive the status information 921 of the first connected device 901 and send the status information 922 of the first connected device 901 to the second connected device 902 using a second time slot.

In various examples, the processor of the communication device 903 may employ a pass-through operation to send status information received from one connected device to another connected device. The processor of the communication device 903 may perform pass-through operation by decoding received status information up to a certain layer of the BT protocol stack and encoding the decoded received status information back to obtain data suitable for BT transmission (e.g. as output of a physical layer of the BT protocol stack). In various examples, the processor of the communication device 903 may decode received status information up to the link layer of the BT protocol stack, or up to the L2CAP layer of the BT protocol stack.

Similarly, the second connected device 902 may send status information 931 of the second connected device 902 to the communication device 903 using a third time slot. The communication device 903 may receive the status information 931 of the second connected device 902 and send the status information 932 of the second connected device 902 to the first connected device 901 using a fourth time slot.

In various examples, each communication provided in this illustrated example with that communicates status information is based on a defined time period. For example, after a T₁ period of time from the first time slot, the first connected device 901 may send another status information 923 of the first connected device 901 to the communication device 903 using a fifth time slot. Similarly, the communication device 903 may receive the status information 923 of the first connected device 901 and send the status information 924 of the first connected device 901 to the second connected device 902 using a sixth time slot. In various examples, period of time between the second time slot and the sixth time slot may be T₁ period of time as well.

Similarly, for status information associated with the second connected device, after a T₂ period of time from the third time slot, the second connected device 902 may send another status information 933 of the second connected device 902 to the communication device 903 using a seventh time slot. The communication device 903 may receive the status information 933 of the second connected device 902 and send the status information 934 of the second connected device 902 to the first connected device 901 using an eighth time slot. In various examples, period of time between the second time slot and the sixth time slot may be T₂ period of time as well.

Accordingly, the communication device 903 may operate as a forwarder of status information between the first connected device 901 and the second connected device 902, that is similar to bridge devices in networks (e.g. local area networks). Each status information of, or associated with, a connected device may include information representing one or more states of the respective connected device.

A state of a connected device may include an operational state of the connected device. For example, the status information may include information associated with audio connection of the connected device, such as type of the audio connection, or information associated with audio data being exchanged with the audio connection, such as media information associated with the audio data being exchanged (e.g. artist information, song name, song duration, remaining time of the song etc.). For example, the status information may include information associated with the resources of the connected device (e.g. a battery level, remaining battery level, whether the connected device is charging or not, a signal strength indicator associated with the established communication link with the audio communication device).

In various examples, the status information may include information associated with audio operations performed by the connected device. In particular, within the context that the connected device is configured to perform bi-directional voice communication (e.g. via teleconferencing, videoconferencing, etc.), the status information may include information representing at least one of a presence of a call, an incoming call, a termination of a call, a state associated with a call, battery status, and/or contact information associated with a call. The state associated with the call may include a call holding state representing whether there is a call held by the connected device, a conference call state representing whether the connected device is performing operations associated with a conference call, an ongoing call state representing whether there is an ongoing call performed by the connected device; an outgoing call state whether there is an outgoing call performed by the connected device, an incoming call state representing whether there is an incoming call, and/or a state of a used audio end-point associated with a call, representing whether an audio end-point is used for a call.

In accordance with various aspects provided herein, a connected device may send status information based on a change associated with at least one of the states provided herein. A processor of the connected device may detect a change in one of the states as provided herein (e.g. an initiation of a call, ending a call, a holding of a call, a battery status change, etc.), and encode status information representing the change at the state.

Considering one of the connected devices configured to stream audio using a first short-range wireless communication link set as an active link, and another one of the connected devices connected to the communication device 903 via a second short-range wireless communication link not set as the active link (e.g. set as established link), the procedures defined in accordance with FIG. 8 and FIG. 9 may allow information flow between the first connected device 901 and the second connected device 902 via the communication device 903.

For example, assuming that the first established link 910 is set as the active link, and the second established link 911 is set as an established link, the information flow between the first connected device 901 and the second connected device 902, via the communication device 903, may include a notification and a caller identifier information provided by request information to the first connected device 901, based on an audio streaming request received from the second connected device 902. Furthermore, the information flow may include within the status information received by the first connected device 901, the status information including signal strength information of the second connected device 902 and the battery information of the second connected device 902. Furthermore, the information flow may include within the status information received by the second connected device 902, the status information including signal strength information of the first connected device 901 and the battery information of the first connected device 901.

For example, assuming that the first established link 910 and the second established link 911 both are set as an established link, the information flow between the first connected device 901 and the second connected device 902, via the communication device 903, may include a notification and a caller identifier information provided by request information to the one of the connected devices 901, 902, based on an audio streaming request received from the another one of the connected devices 901, 902. Furthermore, the information flow may include within the status information received by the first connected device 901, the status information including signal strength information of the second connected device 902, and the battery information of the second connected device 902. Furthermore, the information flow may include within the status information received by the second connected device 902, the status information including signal strength information of the first connected device 901, and the battery information of the first connected device 901.

For example, assuming that the first established link 910 and the second established link 911 both are set as an active link, the information flow may include within the status information received by the first connected device 901, the status information including signal strength information of the second connected device 902 and the battery information of the second connected device 902. Furthermore, the information flow may include within the status information received by the second connected device 902, the status information including signal strength information of the first connected device 901, and the battery information of the first connected device 901.

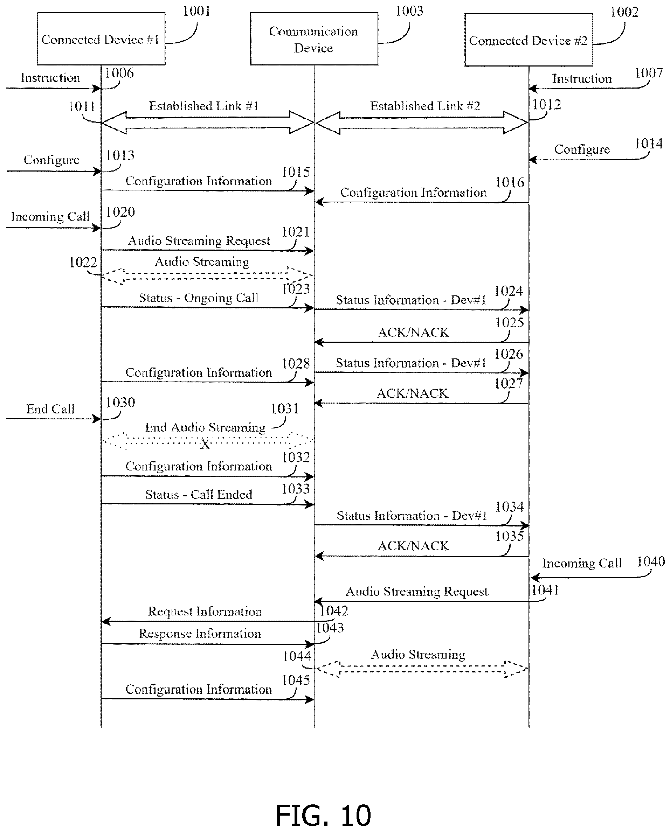

FIG. 10 shows exemplary procedures associated with the exchange of information in accordance with various aspects of this disclosure, including the exchange of information between a first connected device 1001 (e.g. the first connected device 901), a second connected device 1002 (e.g. the second connected device 902), and a communication device 1003 (e.g. the communication device 903). Any of the first connected device 1001, the second connected device 1002, and the communication device 1003 may be configured to implement the procedure associated with the exchange of status information together with the procedure associated with audio streaming as provided with respect to FIGs. 8 and 9.

In this illustrative example, the first connected device 1001 may receive an instruction 1006, and accordingly, a first communication link is established between the first connected device 1001 and the communication device 1003. The first connected device 1001 or the communication device 1003 may establish the first communication link. Similarly, the second connected device 1002 may receive an instruction 1007, and accordingly, a second communication link is established between the second connected device 1002 and the communication device 1003. The second connected device 1001 or the communication device 1003 may establish the first communication link. Instructions 1007, 1008 may be based on interactions of a user, setting the connected devices 1002, 1001 to connect to the communication device 1003.

Accordingly, the communication device 1003 and the first connected device 1001 may communicate with each other using the first established communication link 1011, and the communication device 1003 and the second connected device 1002 may communicate with each other using the second established communication link 1012. It is to be noted that the established communication link illustrated here may include a plurality of logical communication links. In various examples, each logical communication link may provide a transport associated with a particular data communication profile (e.g. a BT profile). For example, the first established communication link 1011 may include a number of logical links associated with different BT profiles. The communication device 1003 and the first connected device 1001 may stream audio data using a first logical communication link of the first established communication link 1011, and the communication device 1003 and the first connected device 1001 may exchange messages using a second logical communication link of the first established communication link 1011.

The first connected device 1001 may receive configuring instructions 1013 and encode configuration information 1015 in accordance with various aspects provided herein for a transmission to the communication device 1003. With the configuration information 1015, the first connected device 1001 may subscribe to receive status information of the second connected device 1002, provide status information to the second connected device 1002 over the communication device 1003, and it may send or receive audio streaming requests (including request information) from the communication device 1003. Similarly, the second connected device 1001 may receive configuring instructions 1014 and encode configuration information 1016 in accordance with various aspects provided herein for a transmission to the communication device 1003. With the configuration information 1016, the second connected device 1002 may subscribe to receive the status information of the first connected device 1001, and provide status information to the first connected device 1001 over the communication device 1003.

The first connected device 1001 may receive a call 1020, and in response to the received call 1020, the first connected device 1001 may send an audio streaming request 1021 to the audio communication device 1003. Accordingly, the first connected device 1001 and the communication device 1003 may stream audio 1022 from each other for voice communication via an audio connection transport by the first established communication link 1011. The communication device 1003 may set the first established communication link 1011 as the active link based on the received audio streaming request 1021. For example. the communication device 1003 being a headset may receive audio data from the first connected device 1001 to provide audio output and the headset may receive audio input via a microphone to provide audio data to the first connected device 1001.

Furthermore, the first connected device 1001 may send status information 1023 representing a change in a state of the first connected device. The status information 1023 may indicate that there is an ongoing call at the first connected device 1001. The status information 1023 may further indicate that the first connected device 1001 streams audio with the communication device 1003. The communication device 1003 may pass through the status information as status information 1024 associated with the first connected device 1001 to the second connected device 1024, and the second connected device 1024 may respond to the status information by sending an acknowledgment/no acknowledgment (ACK/NACK) 1025 back to the communication device 1003.

The communication device 1003 may periodically send status information representing that there is an ongoing call at the first connected device 1001 and/or an audio streaming process is being performed with the first connected device 1001. In this illustrative example, the communication device 1003 may send a further status information 1026 representing that there is (still) an ongoing call at the first connected device 1001, and the second connected device 1002 may send a further ACK/NACK 1027. Furthermore, the first connected device 1001 may send further configuration information 1028 representing that the first connected device 1001 does not desire to receive status information of other connected devices or other audio streaming requests (including request information that may be provided by the communication device 1003).

The ongoing call involving the first connected device 1001 may end 1030, and accordingly, the audio streaming connection 1031 between the first connected device 1001 and the communication device 1003 may end. The first connected device 1001 or the communication device 1003 may end the audio streaming connection 1031. The communication device 1003 may release the active link status of the first established communication link 1010. Furthermore, the first connected device 1001 may send configuration information 1032 to the communication device 1003. With the configuration information 1032, the first connected device 1001 may subscribe to receive status information of the second connected device 1002, provide status information to the second connected device 1002 over the communication device 1003, and it may send or receive audio streaming requests (including request information) to/from the communication device 1003.

The first connected device 1001 may further send status information 1033 representing that the call has been ended. The communication device 1003 may pass through the status information 1034 of the first connected device 1001 representing that the call has been ended at the first connected device 1001 to the second connected device 1002, and the second connected device 1002 may send a further ACK/NACK 1035.

The second connected device 1002 may receive a call 1040, and in response to the received call 1040, the second connected device 1002 may send an audio streaming request 1041 to the audio communication device 1003. The communication device 1003 may send request information 1042 associated with the received audio streaming request 1041, and the first connected device may display information provided with the request information, such as information representing an incoming call at the second connected device 1002, an identifier of the caller making the incoming call, such as name, contact information from a phone book, phone number, etc. User may interact with an input device of the first connected device 1001 to accept or reject the incoming call. Accordingly, the first connected device may send response information 1043 to the communication device including information representing the user interaction.

Based on received response information, which in this illustrative example represents that the user accepts the call, the communication device 1003 may set the second established communication link 1012 as the active link, and the second connected device 1002 and the communication device 1003 may stream audio 1044 from each other for voice communication via the second established communication link 1012. Furthermore, the first connected device 1002 may send further configuration information representing that the first connected device 1002 may not exchange status information or may not receive audio streaming requests.

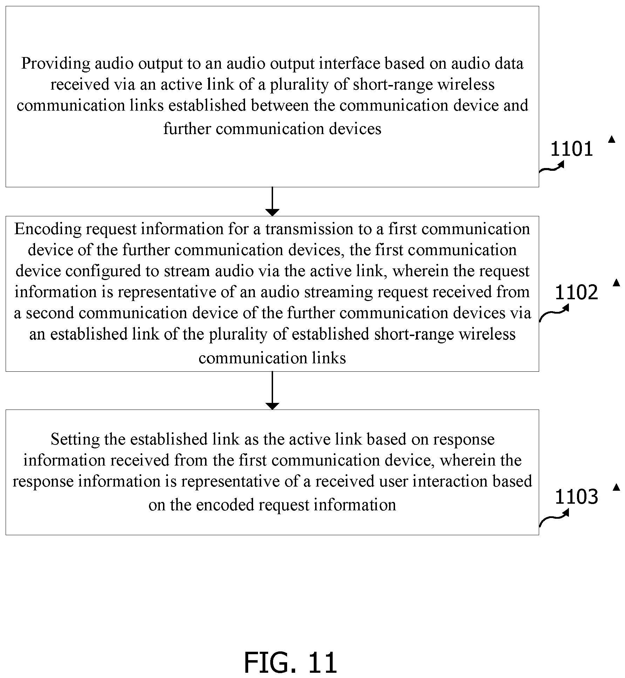

FIG. 11 shows an example of a method. The method may include providing 1101 audio output to an audio output interface based on audio data received via an active link of a plurality of short-range wireless communication links established between the communication device and further communication devices, encoding 1102 request information for a transmission to a first communication device of the further communication devices, the first communication device configured to stream audio via the active link, wherein the request information is representative of an audio streaming request received from a second communication device of the further communication devices via an established link of the plurality of established short-range wireless communication links, and setting 1103 the established link as the active link based on response information received from the first communication device, wherein the response information is representative of a received user interaction based on the encoded request information.

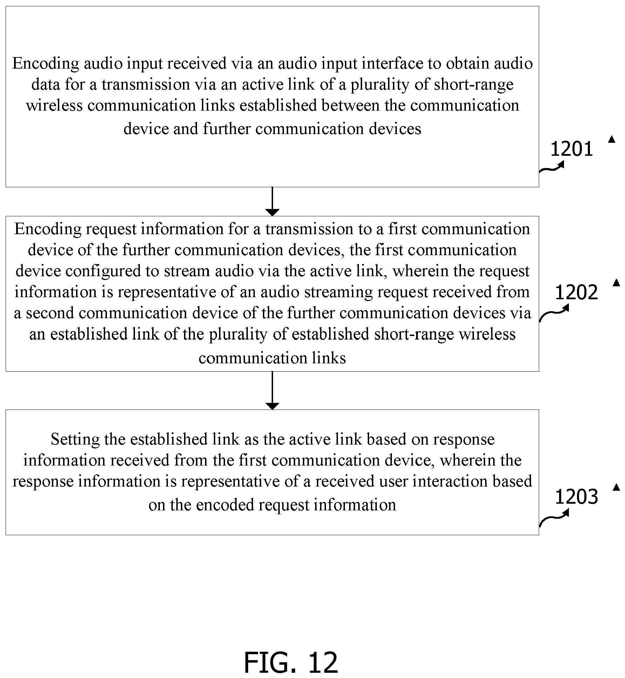

FIG. 12 shows an example of a method. The method may include encoding 1201 audio input received via an audio input interface to obtain audio data for a transmission via an active link of a plurality of short-range wireless communication links established between the communication device and further communication devices, encoding 1202 request information for a transmission to a first communication device of the further communication devices, the first communication device configured to stream audio via the active link, wherein the request information is representative of an audio streaming request received from a second communication device of the further communication devices via an established link of the plurality of established short-range wireless communication links, and setting 1203 the established link as the active link based on response information received from the first communication device, wherein the response information is representative of a received user interaction based on the encoded request information.

The following examples pertain to further aspects of this disclosure.

In example 1, the subject matter includes a communication device may include: a processor configured to: provide audio output to an audio output interface based on audio data received via an active link of a plurality of short-range wireless communication links established between the communication device and further communication devices; encode request information for a transmission to a first communication device of the further communication devices, the first communication device configured to stream audio via the active link, can optionally include that the request information is representative of an audio streaming request received from a second communication device of the further communication devices via an established link of the plurality of established short-range wireless communication links; set the established link as the active link based on response information received from the first communication device, can optionally include that the response information is representative of a received user interaction based on the encoded request information. Optionally the communication device may include a memory.

In example 2, the subject matter of example 1, can optionally include that the request information includes contextual information associated with the audio streaming request received from the second communication device to stream audio. In example 3, the subject matter of example 1 or example 2, can optionally include that the audio streaming request includes information representative of at least one of an incoming call indication, an identifier of a caller, information about audio requested to be streamed with the audio streaming request, and/or an identifier of the second communication device. In example 4, the subject matter of any one of examples 1 to 3, can optionally include that the request information includes information representative of at least one of the incoming call indication, the identifier of a caller, information about audio requested to be streamed with the audio streaming request, and/or the identifier of the second communication device. In example 5, the subject matter of any one of examples 1 to 4, can optionally include that the audio streaming request includes one or more data packets received from the second communication device; can optionally include that the request information includes the one or more data packets.

In example 6, the subject matter of example 5, can optionally include that the one or more data packets of the audio streaming request are suitable for processing at the logical layer control and adaptation protocol layer or the link layer of the protocol stack of a Bluetooth communication protocol; can optionally include that the processor is further configured to perform logical layer control and adaptation functions or link layer functions on the audio streaming request to encode the request information. In example 7, the subject matter of example 6, can optionally include that the one or more data packets of the audio streaming request are data packets of the logical layer control and adaptation protocol layer or the link layer of the protocol stack of the Bluetooth communication protocol; can optionally include that the processor is further configured to forward the one or more data packets of the audio streaming request to the logical layer control and adaptation protocol layer or the link layer of the protocol stack respectively for the transmission to the first communication device. In example 8, the subject matter of example 6 or example 7, can optionally include that at least one of the logical layer control and adaptation functions or the link layer functions are configured to obtain request information data packets may include the one or more data packets received from the second communication device and information representing that the one or more data packets are packets of the second communication device.

In example 9, the subject matter of any one of examples 1 to 8, can optionally include that the processor is further configured to encode audio streaming response information for a transmission to the second communication device; can optionally include that the audio streaming response information is representative of either an acceptance or a rejection of the audio streaming request based on the response information received from the first communication device. In example 10, the subject matter of any one of claims 1 to 9, can optionally include that the short-range wireless communication links are communication links according to Bluetooth communication protocol. In example 11, the subject matter of example 10, can optionally include that the processor is further configured to perform communications via the active link by a connection state of an active mode; can optionally include that the processor is further configured to perform communications via the established link by a connection state with a lower power mode configured to consume lower power than the connection state of the active mode. In example 12, the subject matter of example 11, can optionally include that the connection state with the lower power mode is a connection state with a sniff mode or with a subrating mode. In example 13, the subject matter of any one of examples 11 or 12, can optionally include that the processor is further configured to maintain connection states of the plurality of established links that are not the active link in the lower power mode.

In example 14, the subject matter of any one of examples 11 to 13, can optionally include that the processor is further configured to set the established link as the active link by changing the connection state associated with the established link to the active mode. In example 15, the subject matter of any one of examples 10 to 14, can optionally include that the audio streaming request includes information representative of at least one of a RING alert, an in-band ring tone, an attention (AT) command for controlling the communication device; can optionally include that the request information includes information representative of at least one of the RING alert, the in-band ring tone, and/or the attention command. In example 16, the subject matter of any one of examples 10 to 15, can optionally include that the audio streaming request includes information representative of at least one of an audio stream end-point discovery request, a start streaming request, an audio/video distribution transport protocol open command (AVDTP_OPEN_CMD), an audio/video distribution transport protocol start command (AVDTP_START_CMD), or a message of one of associated Bluetooth Low Energy (BLE) Media streaming and call control protocols.

In example 17, the subject matter of any one of examples 10 to 16, can optionally include that the audio streaming response information includes at least one of an audio/video distribution transport protocol open response (AVDTP_OPEN_RSP), an audio/video distribution transport protocol start response (AVDTP_RSP), an AT command representative of answering or rejecting the call or a message of one of associated Bluetooth Low Energy (BLE) Media streaming and call control protocols In example 18, the subject matter of any one of claims 1 to 17, can optionally include that the processor is further configured to encode the request information based on a forwarding status information stored in a memory, can optionally include that the forwarding status information is representative of whether the processor encodes the request information for the transmission to the first communication device in response to a received audio streaming request or not. In example 19, the subject matter of example 18, can optionally include that the processor is further configured to set the forwarding status information based on configuration information received from the first communication device.

In example 20, the subject matter of example 18 or example 19, can optionally include that the processor is further configured to set the forwarding status information to represent a first state in response to first call information representative of an incoming call received from the first communication device, can optionally include that the communication device does not send the request information in response to the received audio streaming request in the first state; can optionally include that the processor is further configured to set the forwarding status information to represent a second state in response to second call information representative of an end of the incoming call received from the first communication device, can optionally include that the communication device sends the request information in response to the received audio streaming request in the second state. In example 21, the subject matter of any one of claims 1 to 20, can optionally include that the processor is further configured to encode status information for a transmission to the second communication device or to the first communication device, can optionally include that the status information includes information representative of a state of the first communication device that is received from the first communication device or a state of the second communication device that is received from the second communication device respectively. In example 22, the subject matter of example 21, can optionally include that the processor is further configured to encode the status information may include information representative of the state of the first communication device for the transmission to the second communication device over with the established link with the connection state of the lower power mode.

In example 23, the subject matter of any one of claims 1 to 21, can optionally include that the processor is further configured to encode status information for a transmission to the first communication device, can optionally include that the status information includes information representative of a state of the second communication device that is received from the second communication device. In example 24, the subject matter of any one of example 23 or example 24, can optionally include that the status information includes information representing at least one of a presence of a call, an incoming call, a termination of a call, a state associated with a call, battery status, contact information, and/or a signal strength indicator. In example 25, the subject matter of any one of examples 22 to 24, can optionally include that the status information includes information representing the state associated with the call; can optionally include that the state associated with the call includes at least one of a call holding state, a conference call state, an ongoing call state; an outgoing call state, an incoming call state, and/or a state of a used audio end-point associated with the call.

In example 26, the subject matter of any one of claims 1 to 25, can optionally include that the processor is further configured to establish a logical link designated for sending the status information over the active link when the communication device establishes more than one short-range wireless communication links; can optionally include that the processor is further configured to send the request information over the established logical link. In example 27, the subject matter of any one of claims 1 to 26, can optionally include that the processor is further configured to establish a logical link designated to receive the status information over each established short-range wireless communication link; can optionally include that the processor is further configured to receive the status information over each established short-range wireless communication link. In example 28, the subject matter of any one of claims 1 to 27, can optionally include that the processor is further configured to set the established short-range wireless communication link connected to the first communication device as the established link based on the response information received from the first communication device.

In example 29, the subject matter of any one of claims 1 to 28, can optionally include that the processor is further configured to set the established short-range wireless communication link connected to the first communication device as the active link based on an audio streaming end request received from the second communication device; can optionally include that the processor is further configured to set the established short-range wireless communication link connected to the second communication device as the established link based on the audio streaming end request received from the second communication device. In example 30, the subject matter of any one of claims 1 to 29, can optionally include that the processor is further configured to encode information for a logical control channel designated to transport for controlling the active link of the communication device. In example 31, the subject matter of any one of claims 1 to 30, can optionally include that the processor is further configured to establish a logical communication link designated for exchange of information associated with audio streaming requests and/or status information.

In example 32, the subject matter of any one of claims 1 to 31, can optionally include that the active link includes more than one logical communication links and each logical communication link is configured to transport audio data; can optionally include that the processor is further configured to release at least one of the more than one logical communication links based on the response information. In example 33, the subject matter of any one of claims 1 to 32, can optionally include that the established link includes more than one logical communication links and each logical communication link is configured to transport audio data; can optionally include that the processor is further configured to set at least one of the more than one logical communication links as the active link based on the response information. In example 34, the subject matter of any one of claims 1 to 33, further may include: a transceiver configured to transmit and/or receive radio communication signals via the plurality of established short-range wireless communication links. In example 35, the subject matter of any one of claims 1 to 34, further may include: a memory configured to store information representing the active link among the plurality of established short-range wireless communication links. In example 36, the subject matter of any one of claims 1 to 35, further may include: an audio input interface to receive audio input, can optionally include that the audio input interface is couplable to an audio input device. In example 37, the subject matter of any one of claims 1 to 36, further may include: an audio output interface to provide audio output, can optionally include that the audio output interface couplable to an audio output device.

In example 38, a method may include: providing audio output to an audio output interface based on audio data received via an active link of a plurality of short-range wireless communication links established between the communication device and further communication devices; encoding request information for a transmission to a first communication device of the further communication devices, the first communication device configured to stream audio via the active link, can optionally include that the request information is representative of an audio streaming request received from a second communication device of the further communication devices via an established link of the plurality of established short-range wireless communication links; setting the established link as the active link based on response information received from the first communication device, can optionally include that the response information is representative of a received user interaction based on the encoded request information. The method may further include any other aspects provided in this disclosure, in particular aspects mentioned in examples 1-37.

In example 39, the subject matter includes a non-transitory computer-readable medium may include one or more instructions which, if executed by a processor, cause the processor to: provide audio output to an audio output interface based on audio data received via an active link of a plurality of short-range wireless communication links established between the communication device and further communication devices; encode request information for a transmission to a first communication device of the further communication devices, the first communication device configured to stream audio via the active link, can optionally include that the request information is representative of an audio streaming request received from a second communication device of the further communication devices via an established link of the plurality of established short-range wireless communication links; set the established link as the active link based on response information received from the first communication device, can optionally include that the response information is representative of a received user interaction based on the encoded request information. The subject matter may further include any other aspects provided in this disclosure, in particular aspects mentioned in examples 1-37.

In example 40, the subject matter includes a communication device may include: a processor configured to: encode audio input received via an audio input interface to obtain audio data for a transmission via an active link of a plurality of short-range wireless communication links established between the communication device and further communication devices; encode request information for a transmission to a first communication device of the further communication devices, the first communication device configured to stream audio via the active link, can optionally include that the request information is representative of an audio streaming request received from a second communication device of the further communication devices via an established link of the plurality of established short-range wireless communication links; set the established link as the active link based on response information received from the first communication device, can optionally include that the response information is representative of a received user interaction based on the encoded request information. Optionally, the communication device may include a memory.

In example 41, the subject matter of example 40, can optionally include that the request information includes contextual information associated with the audio streaming request received from the second communication device to stream audio. In example 42, the subject matter of example 40 or example 41, can optionally include that the audio streaming request includes information representative of at least one of an incoming call indication, an identifier of a caller, information about audio requested to be streamed with the audio streaming request, and/or an identifier of the second communication device. In example 43, the subject matter of any one of examples 40 to 42, can optionally include that the request information includes information representative of at least one of the incoming call indication, the identifier of a caller, information about audio requested to be streamed with the audio streaming request, and/or the identifier of the second communication device. In example 44, the subject matter of any one of examples 40 to 43, can optionally include that the audio streaming request includes one or more data packets received from the second communication device; can optionally include that the request information includes the one or more data packets. In example 45, the subject matter of example 44, can optionally include that the one or more data packets of the audio streaming request are suitable for processing at the logical layer control and adaptation protocol layer or the link layer of the protocol stack of a Bluetooth communication protocol; can optionally include that the processor is further configured to perform logical layer control and adaptation functions or link layer functions on the audio streaming request to encode the request information.

In example 46, the subject matter of example 45, can optionally include that the one or more data packets of the audio streaming request are data packets of the logical layer control and adaptation protocol layer or the link layer of the protocol stack of the Bluetooth communication protocol; can optionally include that the processor is further configured to forward the one or more data packets of the audio streaming request to the logical layer control and adaptation protocol layer or the link layer of the protocol stack respectively for the transmission to the first communication device. In example 47, the subject matter of example 45 or example 46, can optionally include that at least one of the logical layer control and adaptation functions or the link layer functions obtain request information data packets may include the one or more data packets received from the second communication device and information representing that the one or more data packets are of the second communication device. In example 48, the subject matter of any one of examples 40 to 47, can optionally include that the processor is further configured to encode audio streaming response information for a transmission to the second communication device; can optionally include that the audio streaming response information is representative of either an acceptance or a rejection of the audio streaming request based on the response information received from the first communication device.

In example 49, the subject matter of any one of examples 40 to 48, can optionally include that the short-range wireless communication links are communication links according to Bluetooth communication protocol. In example 50, the subject matter of example 49, can optionally include that the processor is further configured to perform communications via the active link by a connection state of an active mode; can optionally include that the processor is further configured to perform communications via the established link by a connection state with a lower power mode configured to consume lower power than the connection state of the active mode. In example 51, the subject matter of example 50, can optionally include that the connection state with the lower power mode is a connection state with a sniff mode or with a subrating mode. In example 52, the subject matter of any one of examples 50 or 51, can optionally include that the processor is further configured to maintain connection states of the plurality of established links that are not the active link in the lower power mode. In example 53, the subject matter of any one of examples 50 to 52, can optionally include that the processor is further configured to set the established link as the active link by changing the connection state associated with the established link to the active mode.

In example 54, the subject matter of any one of examples 49 to 53, can optionally include that the audio streaming request includes information representative of at least one of a RING alert, an in-band ring tone, an attention (AT) command for controlling the communication device; can optionally include that the request information includes information representative of at least one of the RING alert, the in-band ring tone, and/or the attention command. In example 55, the subject matter of any one of examples 49 to 54, can optionally include that the audio streaming request includes information representative of at least one of an audio stream end-point discovery request, a start streaming request, an audio/video distribution transport protocol open command (AVDTP_OPEN_CMD), an audio/video distribution transport protocol start command (AVDTP_START_CMD), or a message of one of associated Bluetooth Low Energy (BLE) Media streaming and call control protocols In example 56, the subject matter of any one of examples 49 to 55, can optionally include that the audio streaming response information includes at least one of an audio/video distribution transport protocol open response (AVDTP_OPEN_RSP), an audio/video distribution transport protocol start response (AVDTP_RSP), an AT command representative of answering or rejecting the call, or a message of one of associated Bluetooth Low Energy (BLE) Media streaming and call control protocols.

In example 57, the subject matter of any one of examples 49 to 56, can optionally include that the processor is further configured to encode the request information based on a forwarding status information stored in a memory, can optionally include that the forwarding status information is representative of whether the processor encodes the request information for the transmission to the first communication device in response to a received audio streaming request or not. In example 58, the subject matter of example 57, can optionally include that the processor is further configured to set the forwarding status information based on forwarding status information received from the first communication device. In example 59, the subject matter of example 57 or example 58, can optionally include that the processor is further configured to set the forwarding status information to represent a first state in response to first call information representative of an incoming call received from the first communication device, can optionally include that the communication device does not send the request information in response to the received audio streaming request in the first state; can optionally include that the processor is further configured to set the forwarding status information to represent a second state in response to second call information representative of an end of the incoming call received from the first communication device, can optionally include that the communication device is configured to send the request information in response to the received audio streaming request in the second state.

In example 60, the subject matter of any one of examples 40 to 59, can optionally include that the processor is further configured to encode status information for a transmission to the second communication device or to the first communication device, can optionally include that the status information includes information representative of a state of the first communication device that is received from the first communication device or a state of the second communication device that is received from the second communication device respectively. In example 61, the subject matter of example 60, can optionally include that the processor is further configured to encode the status information may include information representative of the state of the first communication device for the transmission to the second communication device over with the established link with the connection state of the lower power mode. In example 62, the subject matter of any one of examples 40 to 61, can optionally include that the processor is further configured to encode status information for a transmission to the first communication device, can optionally include that the status information includes information representative of a state of the second communication device that is received from the second communication device.

In example 63, the subject matter of any one of examples 60 to 62, can optionally include that the status information includes information representing at least one of a presence of a call, an incoming call, a termination of a call, a state associated with a call, battery status, contact information, and/or a signal strength indicator. In example 64, the subject matter of any one of examples 60 to 63, can optionally include that the status information includes information representing the state associated with the call; can optionally include that the state associated with the call includes at least one of a call holding state, a conference call state, an ongoing call state; an outgoing call state, an incoming call state, and/or a state of a used audio end-point associated with the call. In example 65, the subject matter of any one of examples 40 to 64, can optionally include that the processor is further configured to establish a logical link designated for sending the status information over the active link when the communication device establishes more than one short-range wireless communication links; can optionally include that the processor is further configured to send the request information over the established logical link. In example 66, the subject matter of any one of examples 40 to 65, can optionally include that the processor is further configured to establish a logical link designated to receive the status information over each established short-range wireless communication link; can optionally include that the processor is further configured to receive the status information over each established short-range wireless communication link.

In example 67, the subject matter of any one of examples 40 to 66, can optionally include that the processor is further configured to set the established short-range wireless communication link connected to the first communication device as the established link based on the response information received from the first communication device. In example 68, the subject matter of any one of examples 40 to 67, can optionally include that the processor is further configured to set the established short-range wireless communication link connected to the first communication device as the active link based on an audio streaming end request received from the second communication device; can optionally include that the processor is further configured to set the established short-range wireless communication link connected to the second communication device as the established link based on the audio streaming end request received from the second communication device. In example 69, the subject matter of any one of examples 40 to 68, can optionally include that the processor is further configured to encode information for a logical control channel designated to transport for controlling the active link of the communication device. In example 70, the subject matter of any one of examples 40 to 70, can optionally include that the processor is further configured to establish a logical communication link designated for exchange of information associated with audio streaming requests and/or status information.

In example 71, the subject matter of any one of examples 40 to 70, can optionally include that the active link includes more than one logical communication links and each logical communication link is configured to transport audio data; can optionally include that the processor is further configured to release at least one of the more than one logical communication links based on the response information. In example 72, the subject matter of any one of examples 40 to 71, can optionally include that the established link includes more than one logical communication links and each logical communication link is configured to transport audio data; can optionally include that the processor is further configured to set at least one of the more than one logical communication links as the active link based on the response information. In example 73, the subject matter of any one of examples 40 to 72, further may include: a transceiver configured to transmit and/or receive radio communication signals via the plurality of established short-range wireless communication links. In example 74, the subject matter of any one of examples 40 to 73, further may include: a memory configured to store information representing the active link among the plurality of established short-range wireless communication links. In example 75, the subject matter of any one of examples 40 to 74, further may include: an audio input interface to receive audio input, can optionally include that the audio input interface is couplable to an audio input device. In example 76, the subject matter of any one of examples 40 to 75, further may include: an audio output interface to provide audio output, can optionally include that the audio output interface couplable to an audio output device.

In example 77, a method may include: encoding audio input received via an audio input interface to obtain audio data for a transmission via an active link of a plurality of short-range wireless communication links established between the communication device and further communication devices; encoding request information for a transmission to a first communication device of the further communication devices, the first communication device configured to stream audio via the active link, can optionally include that the request information is representative of an audio streaming request received from a second communication device of the further communication devices via an established link of the plurality of established short-range wireless communication links; setting the established link as the active link based on response information received from the first communication device, can optionally include that the response information is representative of a received user interaction based on the encoded request information. The method may further include any other aspects provided in this disclosure, in particular aspects mentioned in examples 40-76.

In example 78, a non-transitory computer-readable medium may include one or more instructions which, if executed by a processor, cause the processor to: encode audio input received via an audio input interface to obtain audio data for a transmission via an active link of a plurality of short-range wireless communication links established between the communication device and further communication devices; encode request information for a transmission to a first communication device of the further communication devices, the first communication device configured to stream audio via the active link, can optionally include that the request information is representative of an audio streaming request received from a second communication device of the further communication devices via an established link of the plurality of established short-range wireless communication links; set the established link as the active link based on response information received from the first communication device, can optionally include that the response information is representative of a received user interaction based on the encoded request information. The non-transitory computer-readable medium may further include further instructions associated any other aspects provided in this disclosure, in particular aspects mentioned in examples 40-76.

In example 79, a communication device may include: a processor configured to: perform communication operations to communicate with a plurality of communication devices via a plurality of short-range wireless communication links may include an active link and at least one established link; stream audio using the active link; encode request information for a transmission to a first communication device of the plurality of communication devices, the first communication device connected via the active link, can optionally include that the request information is representative of an audio streaming request received from a second communication device of the plurality of communication devices, the second communication device connected via the established link; change the active link to the established link based on response information received from the first communication device, can optionally include that the response information is representative of a received user interaction based on the encoded request information. The communication device may further include any other aspects provided in this disclosure, in particular aspects mentioned in examples 1-37 or examples 40-76.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor or 9. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more."

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D Points, among others, or any combination thereof. Registers, shift registers, processor registers, data buffers, among others, are also embraced herein by the term memory. The term "software" refers to any type of executable instruction, including firmware.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

The term "antenna", as used herein, may include any suitable configuration, structure and/or arrangement of one or more antenna elements, components, units, assemblies and/or arrays. The antenna may implement transmit and receive functionalities using separate transmit and receive antenna elements. The antenna may implement transmit and receive functionalities using common and/or integrated transmit/receive elements. The antenna may include, for example, a phased array antenna, a single element antenna, a set of switched beam antennas, and/or the like.

It will be understood that when an element is referred to as being "connected" or "coupled" to another element, it can be physically connected or coupled to the other element such that current and/or electromagnetic radiation (e.g., a signal) can flow along a conductive path formed by the elements. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. A communication device comprising:
a memory; and
a processor configured to:
provide audio output to an audio output interface based on audio data received via an active link of a plurality of short-range wireless communication links established between the communication device and further communication devices;
encode request information for a transmission to a first communication device of the further communication devices, the first communication device configured to stream audio via the active link, wherein the request information is representative of an audio streaming request received from a second communication device of the further communication devices via an established link of the plurality of established short-range wireless communication links;
set the established link as the active link based on response information received from the first communication device, wherein the response information is representative of a received user interaction based on the encoded request information.

2. The communication device of claim 1,
wherein the request information comprises contextual information associated with the audio streaming request received from the second communication device to stream audio.

3. The communication device of any one of claims 1 or 2,
wherein the processor is further configured to encode audio streaming response information for a transmission to the second communication device;
wherein the audio streaming response information is representative of either an acceptance or a rejection of the audio streaming request based on the response information received from the first communication device.

4. The communication device of any one of claims 1 to 3,
wherein the short-range wireless communication links are communication links according to Bluetooth communication protocol.

5. The communication device of claim 4,
wherein the processor is further configured to perform communications via the active link by a connection state of an active mode;
wherein the processor is further configured to perform communications via the established link by a connection state with a lower power mode configured to consume lower power than the connection state of the active mode.

6. The communication device of claim 5,
wherein the connection state with the lower power mode is a connection state with a sniff mode or with a subrating mode.

7. The communication device of claim 5 or 6,
wherein the processor is further configured to set the established link as the active link by changing the connection state associated with the established link to the active mode.

8. The communication device of any one of claims 1 to 6,
wherein the processor is further configured to encode the request information based on a forwarding status information stored in the memory, wherein the forwarding status information is representative of whether the processor encodes the request information for the transmission to the first communication device in response to a received audio streaming request or not.

9. The communication device of claim 7,
wherein the processor is further configured to set the forwarding status information to represent a first state in response to first call information representative of an incoming call received from the first communication device, wherein the communication device does not send the request information in response to the received audio streaming request in the first state;
wherein the processor is further configured to set the forwarding status information to represent a second state in response to second call information representative of an end of the incoming call received from the first communication device, wherein the communication device sends the request information in response to the received audio streaming request in the second state.

10. The communication device of any one of claims 1 to 8,
wherein the processor is further configured to encode status information for a transmission to the second communication device or to the first communication device, wherein the status information comprises information representative of a state of the first communication device that is received from the first communication device or a state of the second communication device that is received from the second communication device respectively.

11. The communication device of claim 10,
wherein the processor is further configured to encode the status information comprising information representative of the state of the first communication device for the transmission to the second communication device over with the established link with the connection state of the lower power mode.

12. The communication device of claim 11,
wherein the status information comprises information representative of a state of the second communication device that is received from the second communication device;
wherein the status information comprises information representing at least one of a presence of a call, an incoming call, a termination of a call, a state associated with a call, battery status, contact information, and/or a signal strength indicator.

13. The communication device of any one of claims 1 to 12,
wherein the processor is further configured to establish a logical link designated for sending the status information over the active link when the communication device establishes more than one short-range wireless communication links;
wherein the processor is further configured to send the request information over the established logical link.

14. A communication device comprising:
a memory; and
a processor configured to:
encode audio input received via an audio input interface to obtain audio data for a transmission via an active link of a plurality of short-range wireless communication links established between the communication device and further communication devices;
encode request information for a transmission to a first communication device of the further communication devices, the first communication device configured to stream audio via the active link, wherein the request information is representative of an audio streaming request received from a second communication device of the further communication devices via an established link of the plurality of established short-range wireless communication links;
set the established link as the active link based on response information received from the first communication device, wherein the response information is representative of a received user interaction based on the encoded request information.

15. The communication device of claim 14,
wherein the request information comprises contextual information associated with the audio streaming request received from the second communication device to stream audio.
